# EUROPEAN PATENT SPECIFICATION

(11) **EP 3 974 186 B1**
(45) Date of publication and mention of the grant of the patent: **30.10.2024**
(21) Application number: 20886185.6
(22) Date of filing: 30.09.2020
(51) Int. Cl.: B29C 64/209, B33Y 30/00, B41J 2/175

(54) **3D PRINTING HEAD AND 3D PRINTER**
3D-DRUCKKOPF UND 3D-DRUCKER
TÊTE D'IMPRESSION 3D ET IMPRIMANTE 3D

(30) Priority: 27.07.2020 CN 202010727092; 27.07.2020 CN 202021489083 U
(43) Date of publication of application: 30.03.2022
(73) Proprietor: Kocel Intelligent Machinery Limited, Yinchuan, Ningxia 750021 (CN)
(72) Inventor: WANG, Junwei, Yinchuan, Ningxia 750021 (CN); YAN, Tao, Yinchuan, Ningxia 750021 (CN); BAI, Xue, Yinchuan, Ningxia 750021 (CN); PENG, Fan, Yinchuan, Ningxia 750021 (CN); LIU, Yi, Yinchuan, Ningxia 750021 (CN); MA, Xi, Yinchuan, Ningxia 750021 (CN); MA, Rui, Yinchuan, Ningxia 750021 (CN); DU, Yinxue, Yinchuan, Ningxia 750021 (CN); YANG, Xiaoping, Yinchuan, Ningxia 750021 (CN)
(74) Representative: Vitina, Maruta
(86) International application number: PCT/CN2020/119317
(87) International publication number: WO 2022/021603

(56) References cited:
- EP-A1- 3 064 257
- WO-A1-2018/151725
- CN-A- 103 213 411
- CN-A- 104 742 374
- CN-A- 107 028 681
- CN-A- 107 215 103
- CN-A- 107 215 103
- CN-A- 107 470 559
- CN-A- 107 776 200
- CN-A- 108 454 115
- CN-A- 110 280 716
- CN-A- 110 315 752
- CN-A- 110 387 326
- CN-A- 111 716 907
- US-A1- 2015 201 499
- US-B1- 9 079 441
- US-B1- 9 079 441

## Description

The present application claims the benefit of priorities to the following two Chinese patent applications,
1) Chinese Patent Application No. 202010727092.9, titled "3D PRINTING HEAD AND 3D PRINTER", filed with the China National Intellectual Property Administration on July 27, 2020; and
2) Chinese Patent Application No. 202021489083.2 titled "3D PRINTING HEAD AND 3D PRINTER", filed with the China National Intellectual Property Administration on July 27, 2020.

### FIELD

The present application relates to the technical field of 3D printing, and in particular to a 3D printing head and a 3D printer.

### BACKGROUND

3D printing technology is similar to conventional inkjet printing technology, in which the printing head is one of the most critical parts of the printer, and the printing head directly affects the printing efficiency and printing quality of the product. The nozzle of the 3D printing head communicates with the ink cartridge to perform ink jetting. In the field of 3D printing, the liquid material provided by the printing head is called ink. In the case of multiple nozzles, the pipelines connecting the nozzles with the ink cartridge are complicated, which is not conducive to the layout and is easy to be damaged. In addition, the connection between the driving board that drives the nozzle and the nozzle is easy to loosen during use, which in turn adversely affects the inkjet effect of the nozzle. Prior art document CN110280716A discloses an ink-jet device and a 3D printing device and relates to the technical field of 3D printing. A controller, a negative pressure box assembly, an ink storing box, a bottom plate and a plurality of spray head assemblies uniformly distributed on the bottom plate are included; each spray head assembly communicates with an ink supplying ink box assembly; each spray head assembly comprises a spray nozzle, an ink inlet and an ink returning port communicating with one another; the ink supplying ink box assembly comprises an ink supplying cavity and an in returning cavity; each ink inlet communicates with the ink supplying cavity, and each ink returning port communicates with the ink returning cavity; the negative pressure box assembly comprises a first cavity and a second cavity; the first cavity and the second cavity communicate with a negative pressure source so that the gas pressure in the first cavity can be larger than that in the second cavity; the first cavity communicates with the ink supplying cavity; the second cavity communicates with the ink returning cavity; and the ink supplying cavity and the ink returning cavity communicate with the ink storing box so that an ink circulating passageway of the ink storing box, the ink supplying cavity, the ink inlets, the ink returning ports and the ink returning cavity can be formed. The uniformity and the consistency of ink supplying can be improved, the ink jetting quality is improved, and then the printing effect is improved. Prior art document US2015/201499A discloses a device, a system, and a method of three-dimensional printing. A device includes: a first 3D-printing head to selectively discharge conductive 3D-printing material; a second 3D-printing head to selectively discharge insulating 3D-printing material; and a processor to control operations of the first and second 3D-printing heads based on a computer-aided design (CAD) scheme describing a printed circuit board (PCB) intended for 3D-printing. A 3D-printer device utilizes 3D-printing methods, in order to 3D-print: (a) a functional multi-layer PCB; or (b) a functional stand-alone electric component; or (c) a functional PCB having an embedded or integrated electric component, both of them 3D-printed in a unified 3D-printing process.

### SUMMARY

In view of this, a first object of the present application is to provide a 3D printing head, the structural design of the 3D printing head can effectively solve the problem of complicated and numerous independent pipelines communicating the nozzle with the ink cartridge, which is not conducive to the layout. A second object of the present application is to provide a 3D printer including the above 3D printing head.

In order to achieve the first object, the following technical solutions are provided according to the present application.
A 3D printing head includes a mounting frame, an ink supply component and an inkjet component;
the ink supply component includes an ink cartridge, and the ink cartridge is arranged on the mounting frame; and
the inkjet component includes a nozzle and a driving board arranged on the mounting frame, the nozzle is in fluid communication with the ink cartridge, and the driving board is connected with the nozzle by insertion for controlling the nozzle to eject ink,
the ink supply component further comprises a negative pressure box, the ink cartridge has an ink supply chamber and an ink return chamber, the negative pressure box has an ink supply negative pressure chamber and an ink return negative pressure chamber, the ink supply chamber is in fluid communication with the ink supply negative pressure chamber, and the ink return chamber is in fluid communication with the ink return negative pressure chamber; and
the nozzle is in fluid communication with the ink supply chamber and the ink return chamber of the ink cartridge.

In an embodiment,
the ink supply component includes a shunt pipe that is in fluid communication with the ink cartridge; the shunt pipe is a pipe configured to realize fluid communication between the nozzle and the ink cartridge, and
the nozzle is in fluid communication with the shunt pipe.

In an embodiment, the shunt pipe includes multiple branch pipes, and the branch pipes communicate with each other.

In an embodiment, multiple nozzles are provided, and the nozzles are arranged in an array on a printing base plate, and each column of the nozzles is arranged corresponding to one of the branch pipes.

In an embodiment, a cover plate is provided with positioning seats corresponding to positions of three points of a three-point adjustment plate, and a micrometer head is mounted on each positioning seat for adjusting the horizontal straightness of the three-point adjustment plate.

In an embodiment, one end of the micrometer head has a knob, and the other end is a push rod, and the push rod abuts against the three-point adjustment plate in a horizontal direction.

In an embodiment, a power plug and an optical fiber protection box are provided on the cover plate.

In an embodiment, the ink cartridge is a box made of a non-metallic material.

In an embodiment, the mounting frame includes two opposite side plates and multiple transverse ribs connecting the two side plates, and the nozzle is arranged on a transverse rib located at the bottom.

In an embodiment, the driving board is fixedly connected to a transverse rib located in the middle.

In an embodiment, the oppositely arranged side plates are both provided with guide grooves, a partition plate is slidably mounted in the guide grooves, the partition plate is configured to support the ink cartridge, and a fixing member for locking or unlocking the partition plate and the side plate is arranged in cooperation with the partition plate.

In an embodiment, the transverse rib located in the middle is provided with multiple through holes, and the through holes are configured to admit compressed air to cool the driving board.

In an embodiment, a foam destroyer is mounted at an ink inlet of the ink cartridge.

In an embodiment, a degassing chamber is provided at an outer edge of the ink cartridge.

In an embodiment, the ink supply component further includes a liquid material tank, a liquid supply pump and a liquid supply filter, wherein the liquid supply pump and the liquid supply filter are communicatively arranged between the liquid material tank and an ink supply chamber.

In an embodiment, the liquid supply filter includes a primary filter connected to an outlet of the liquid supply pump and a secondary filter connected to an outlet of the primary filter.

In an embodiment, the ink supply component further includes a degassing membrane provided at the outlet of the primary filter, and the degassing membrane is configured to remove gas from the ink.

In an embodiment, multiple dividing plates are provided in the ink supply chamber to form multiple sub-ink supply chambers.

In an embodiment, the ink supply component further includes a liquid return pump, a liquid material recovery barrel, and a liquid return filter connected in sequence, the liquid return pump is in communication with the ink return chamber, and the liquid return filter is in communication with the liquid material tank.

In an embodiment, the 3D printing head further includes a cleaning component, the cleaning component includes a cleaning tank and a scrubbing member, the cleaning tank is configured to receive cleaning liquid, and the scrubbing member is movably mounted on the cleaning tank for scrubbing the nozzle.

In an embodiment, the scrubbing member includes a roller wheel and a roller wheel driving member, the roller wheel is rotatably mounted in the cleaning tank, and a sponge layer is provided at an outer edge of the roller wheel, and the roller wheel driving member is drivingly connected to the roller wheel.

In an embodiment, the scrubbing member further includes a jacking member and a bracket, the jacking member is arranged at the bottom of the cleaning tank, the bracket is fixedly connected to an output end of the jacking member, and the roller wheel is rotatably connected with the bracket.

In an embodiment, a cleaning brush for cleaning the sponge layer is mounted on an inner wall of the cleaning tank.

In an embodiment, a scraper for squeezing the sponge layer is further provided on the inner wall of the cleaning tank.

In an embodiment, the 3D printing head further includes a gas source device, and the ink cartridge has at least two gas inlets; the gas source device includes a first negative pressure generator and a second negative pressure generator, a gas outlet of the first negative pressure generator and a gas outlet of the second negative pressure generator are respectively connected to the at least two gas inlets of the ink cartridge, so as to admit different negative pressures into the ink cartridge.

In an embodiment, the gas source device further includes a gas source filter component, the gas source filter component is connected with an external gas source, and a gas outlet of the gas source filter component is respectively connected with a gas inlet of the first negative pressure generator and a gas inlet of the second negative pressure generator.

In an embodiment, the gas source filter component includes a gas source processor and a fine filter, a gas inlet of the gas source processor is connected to the external gas source, a gas inlet of the fine filter is connected with a gas outlet of the gas source processor, and a gas outlet of the fine filter is respectively connected with the gas inlet of the first negative pressure generator and the gas inlet of the second negative pressure generator.

In an embodiment, the gas source device further includes a first pressure reducing valve and a second pressure reducing valve, the gas outlet of the fine filter is respectively connected with an inlet of the first pressure reducing valve and an inlet of the second pressure reducing valve, an outlet of the first pressure reducing valve is connected with the gas inlet of the first negative pressure generator, and an outlet of the second pressure reducing valve is connected with the gas inlet of the second negative pressure generator.

In an embodiment, the gas source device further includes a first negative pressure reservoir and a second negative pressure reservoir, a gas inlet of the first negative pressure reservoir is connected to the gas outlet of the first negative pressure generator, a gas inlet of the second negative pressure reservoir is connected to the gas outlet of the second negative pressure generator, a gas outlet of the first negative pressure reservoir and a gas outlet of the second negative pressure reservoir are respectively connected with different gas inlets of the ink cartridge.

In an embodiment, the gas source device further includes a third pressure reducing valve and a positive pressure reservoir, wherein an inlet of the third pressure reducing valve is connected with the gas outlet of the fine filter, an outlet of the third pressure reducing valve is connected with a gas inlet of the positive pressure reservoir, and a gas outlet of the positive pressure reservoir is connected with the gas inlet of the ink cartridge.

In an embodiment, the gas source device further includes a first two-position three-way valve, a second two-position three-way valve and a three-way joint, the gas outlet of the positive pressure reservoir is connected with a first gas inlet of the first two-position three-way valve, the gas outlet of the second negative pressure reservoir is connected with a second gas inlet of the first two-position three-way valve, a gas outlet of the first two-position three-way valve is connected to a first port of the three-way joint, a second port of the three-way joint is connected with a first gas inlet of the second two-position three-way valve, a third port of the three-way joint is connected with a first gas inlet of the ink cartridge, the gas outlet of the first negative pressure reservoir is connected with a second gas inlet of the second two-position three-way valve, and a gas outlet of the second two-position three-way valve is connected with a second gas inlet of the ink cartridge.

By applying the 3D printing head provided by the present application, the ink cartridge of the ink supply component is connected with the nozzle of the inkjet component through the shunt pipe, and the nozzle is controlled by the driving board to perform inkjet. Since the ink cartridge is connected with the nozzle through the shunt pipe, the shunt pipe can realize the shunt from the ink cartridge to the multiple nozzles in the case of multiple nozzles, so there is no need to provide multiple independent pipelines, which simplifies the structure and facilitates the overall layout. Besides, the ink cartridge is communicated with multiple nozzles through the shunt pipe, and the interior of the shunt pipe is communicated, which is not easy to be blocked, so the working stability of the nozzles is improved, and the flow of each nozzle is more uniform. In addition, the nozzle is connected with the driving board by insertion, which can reduce line connections, thereby reducing the occurrence of fault points, saving mounting space and facilitating maintenance.

In an embodiment, a 3D printing head and a 3D printer, having good inkjet effect, easy to adjust height and straightness, and low in mounting and maintenance cost, are provided according to the present application. The 3D printing head includes: a mounting frame, an ink supply component, and an inkjet component; the mounting frame includes a connecting plate, a three-point adjustment plate and a cover plate, the connecting plate is configured to connect with a driving module and drive the 3D printing head to move, the three-point adjustment plate is arranged on the connecting plate, and the cover plate is movably mounted on the three-point adjustment plate; the ink supply component includes an ink cartridge and a shunt pipe communicating with each other, the ink cartridge is mounted on the three-point adjustment plate, and the shunt pipe is arranged on the cover plate; the inkjet component includes a printing base plate, a nozzle, and a driving board, the printing base plate is connected to the cover plate, the nozzle is mounted on the printing base plate and communicated with the shunt pipe, and the driving board is inserted into the nozzle for controlling the nozzle to eject ink.

The ink cartridge is placed outside on the three-point adjustment plate, which effectively avoids heating the ink cartridge due to the heating of the driving board, which may change the ink temperature, and then cause the ink viscosity to change and cause the inkjet quality to drop; the outside placement of the ink cartridge makes it possible to simply and effectively cool the ink cartridge by relying on natural wind during the printing process; in addition, the three-point adjustment plate is movably mounted on the cover plate, which is conducive to achieving smooth and efficient adjustment of height and straightness. Furthermore, by arranging the shunt pipe on the cover plate, it may effectively replace multiple liquid inlet pipes connected between the ink cartridge and the nozzle, which greatly simplifies the mounting complexity and helps to reduce mounting and maintenance costs.

By applying the 3D printing head, the nozzle is connected with the driving board by insertion, which can reduce line connections, thereby reducing the occurrence of fault points, saving mounting space and facilitating maintenance.

In order to achieve the above-mentioned second object, a 3D printer is further provided according to the present application, which includes any of the above-mentioned 3D printing heads. Since the above-mentioned 3D printing head having the above technical effects, the 3D printer having the 3D printing head should also have corresponding technical effects.

### BRIEF DESCRIPTION OF THE DRAWINGS

To illustrate technical solutions according to the embodiments of the present application or in the conventional technology more clearly, the drawings to be used in the description of the conventional technology or the embodiments are described briefly hereinafter. Apparently, the drawings described hereinafter are only some embodiments of the present application, and other drawings may be obtained by those skilled in the art based on those drawings without any creative effort.
FIG. 1 is a perspective view of a 3D printing head according to an embodiment;
FIG. 2 is a perspective view of the 3D printing head shown in FIG. 1 from another perspective;
FIG. 3 is a schematic structural view of part of the 3D printing head according to an embodiment;
FIG. 4 is a perspective view of the 3D printing head according to another embodiment;
FIG. 5 is a perspective view of part of the 3D printing head according to another embodiment;
FIG. 6 is a schematic view of a structure of a cleaning component;
FIG. 7 is a schematic structural view of a gas source device;
FIG. 8 is a schematic view of a structure of an ink supply component;
FIG. 9 is a schematic view of a mounting structure of the ink supply component and the inkjet component;
FIG. 10 is a schematic view of an ink cartridge;
FIG. 11 is a schematic cross-sectional view of the ink cartridge;
FIG. 12 is a schematic view of a negative pressure box; and
FIG. 13 is a schematic diagram showing the circulation of the liquid material of the ink supply component.

Reference numbers in the drawings are listed as follows.

| | | | |
|---|---|---|---|
| mounting frame | 100, | connecting plate | 110, |
| three-point adjustment plate | 120, | cover plate | 130, |
| positioning seat | 131, | micrometer head | 132, |
| power plug | 140, | optical fiber protection box | 150, |
| side plate | 160; | bottom rib | 161, |
| middle rib | 162, | top rib | 163, |
| partition plate | 164, | guide groove | 165; |
| parallelism adjustment block | 172, | | |
| perpendicularity adjustment block | 173, | | |
| micro distance sensor | 174, | adjustment plate | 175; |
| ink supply component | 200, | ink cartridge | 210, |
| shunt pipe | 220, | sealing plug | 230; |
| ink supply chamber | 211, | ink return chamber | 212, |
| dividing plate | 213, | liquid supply joint | 214; |
| negative pressure box | 240, | | |
| ink supply negative pressure chamber | 241, | | |
| ink return negative pressure chamber | 242, | | |
| ink supply pipe | 243, | ink return pipe | 244, |
| right-angled through-plate joint | 245, | right-angled pagoda joint | 246, |
| liquid return pump | 251, | liquid material recovery barrel | 252, |
| liquid return filter | 253; | liquid outlet joint | 221; |
| inkjet component | 300, | printing base plate | 310, |
| nozzle | 320, | driving board | 330, |
| fixing rib | 340; | | |
| cleaning tank | 411, | roller wheel | 412, |
| sponge layer | 413, | scraper | 414, |
| cleaning brush | 415, | jacking member | 416, |
| liquid level sensor | 417, | bracket | 418; |
| gas source processor | 511, | | |
| fine filter 512, first pressure reducing valve | 521, | | |
| second pressure reducing valve | 522, | | |
| third pressure reducing valve | 523, | | |
| first negative pressure generator | 531, | | |
| second negative pressure generator | 532, | | |
| positive pressure reservoir | 541, | | |
| second negative pressure reservoir | 542, | | |
| first negative pressure reservoir | 543, | | |
| first two-position three-way valve | 551, | | |
| second two-position three-way valve | 552; | | |
| liquid material tank | 610, | liquid supply filter | 620, |
| primary filter | 621, | secondary filter | 622, |
| liquid supply pump | 630, | liquid material pipe | 640, |
| foam destroyer | 650, | negative pressure pipe | 660, |
| liquid level sensor | 670, | ink inlet | 611, |
| exhaust device | 612. | | |

### DETAILED DESCRIPTION OF THE EMBODIMENTS

In order to facilitate the understanding of the present application, the present application will be described in full details with reference to the relevant drawings. The preferred embodiments of the present application are shown in the drawings. However, the present application can be implemented in many different forms and is not limited to the embodiments described herein. On the contrary, the purpose of providing these embodiments is to make the disclosure of the present application more through and comprehensive.

It should be noted that, when an element is referred to as being "arranged" on another element, it may be directly on another element or there may be an intermediate element. When an element is considered to be "connected" to another element, it may be directly connected to another element or there may be an intermediate element at the same time. As used herein, the terms "vertical", "horizontal", "left", "right", "top", "bottom", "bottom end", "top end" and similar expressions are for the purpose of illustration only, and do not imply it is the only possible embodiment.

Unless otherwise defined, all technical and scientific terms used herein have the same meanings as commonly understood by those skilled in the technical field of the present application. The terms used in the specification of the present application are only for the purpose of describing specific embodiments, and are not intended to limit the present application. The term "and/or" as used herein includes any and all combinations of one or more related listed items.

In an embodiment, the 3D printing head provided by the present application includes an ink supply component and an inkjet component.

The ink supply component includes an ink cartridge and a shunt pipe that communicate with each other. The shunt pipe is communicated with the ink cartridge for ink delivery.

The inkjet component includes a nozzle and a driving board, the nozzle is communicated with the shunt pipe, and the driving board is connected with the nozzle for controlling the nozzle to eject ink. The driving board is connected with the nozzle for controlling the nozzle to eject ink. For its specific structure and working principle, reference can be made to the corresponding configuration of the existing driving board, which will not be repeated here. Preferably, the driving board is inserted into the nozzle. The insertion method facilitates the assembly of the driving board with the nozzle, and the maintenance is convenient. Specifically, the driving board is inserted into the nozzle and is signal connected with the nozzle by insertion, therefore there is no need to separately provide lines to connect the nozzle with the driving board, thus reducing the line connection, further reducing the occurrence of fault points and saving the mounting space.

The nozzle is communicated with the shunt pipes, that is, the ink cartridge is communicated with the nozzle through the shunt pipe. The arrangement of the shunt pipe can realize the communication between the ink cartridge and multiple nozzles, and the nozzles are also communicated due to the arrangement of the shunt pipe.

In order to facilitate the mounting of the ink supply component and the inkjet component, a mounting frame may be specifically provided, and the specific structure of the mounting frame may be configured as required, which is not specifically limited here as long as the ink supply component and the inkjet component can be mounted thereto. According to actual needs, the ink cartridge may be mounted inside the mounting frame or outside the mounting frame.

By applying the 3D printing head provided by the present application, the ink cartridge of the ink supply component is connected with the nozzle of the inkjet component through the shunt pipe, and the nozzle is controlled by the driving board to perform inkjet. Since the ink cartridge is connected with the nozzle through the shunt pipe, the shunt pipe can realize the shunt from the ink cartridge to the multiple nozzles in the case of multiple nozzles, so there is no need to provide multiple independent pipelines, which simplifies the structure and facilitates the overall layout. Besides, the ink cartridge is communicated with multiple nozzles through the shunt pipe, and the interior of the shunt pipe is communicated, which is not easy to be blocked, so the working stability of the nozzles is improved, and the flow of each nozzle is more uniform.

In addition, the printing mechanism of the existing 3D printers has many problems and risks. First of all, it is piezoelectric nozzles used in 3D printing, the inkjet effect of the nozzles directly affects the printing quality, and one of the key factors affecting the inkjet effect is the ink viscosity. The ink viscosity is greatly affected by temperature. During the printing process, the driving board emits heat, the ink cartridge or the ink pipe is inside the printing mechanism, and the ink temperature is changed, reaching 40°C at the highest, resulting in poor inkjet effect of the nozzle or even printing failure; secondly, the mounting and maintenance of the ink pipe and the ink cartridge is very inconvenient, resulting in high mounting and maintenance costs. In addition, in order to position and adjust the height and straightness of the printing mechanism, the printing mechanism has many adjustment points and a large number of adjustment bolts. However, the adjustment graduation of the bolts is relatively rough and insufficiently refined, which brings a lot of inconvenience to the installation and the accuracy adjustment of the printing mechanism, and increases the adjustment difficulty.

Based on the above technical problems, in another embodiment, a 3D printing head includes: a mounting frame, an ink supply component, and an inkjet component; the mounting frame includes a connecting plate, a three-point adjustment plate and a cover plate, the connecting plate is configured to connect with a driving module and drive the 3D printing head to move, the three-point adjustment plate is arranged on the connecting plate, and the cover plate is movably mounted on the three-point adjustment plate; the ink supply component includes an ink cartridge and a shunt pipe communicating with each other, the ink cartridge is mounted on the three-point adjustment plate, and the shunt pipe is arranged on the cover plate; the inkjet component includes a printing base plate, a nozzle, and a driving board, the printing base plate is connected to the cover plate, the nozzle is mounted on the printing base plate and communicated with the shunt pipe, and the driving board is inserted into the nozzle for controlling the nozzle to eject ink. In this embodiment, the mounting positions of the ink supply component and the inkjet component on the mounting frame are limited.

In this 3D printing head, the ink cartridge of the printing mechanism is placed outside on the three-point adjustment plate, which effectively avoids heating the ink cartridge due to the heating of the driving board, which may change the ink temperature, and then cause the ink viscosity to change and cause the inkjet quality to drop; the outside placement of the ink cartridge makes it possible to simply and effectively cool the ink cartridge by relying on natural wind during the printing process; in addition, the three-point adjustment plate is movably mounted on the cover plate, which is conducive to achieving smooth and efficient adjustment of height and straightness of the printing mechanism. Furthermore, by arranging the shunt pipe on the cover plate, it may effectively replace multiple liquid inlet pipes connected between the ink cartridge and the nozzle, which greatly simplifies the mounting complexity of the printing mechanism and helps to reduce mounting and maintenance costs.

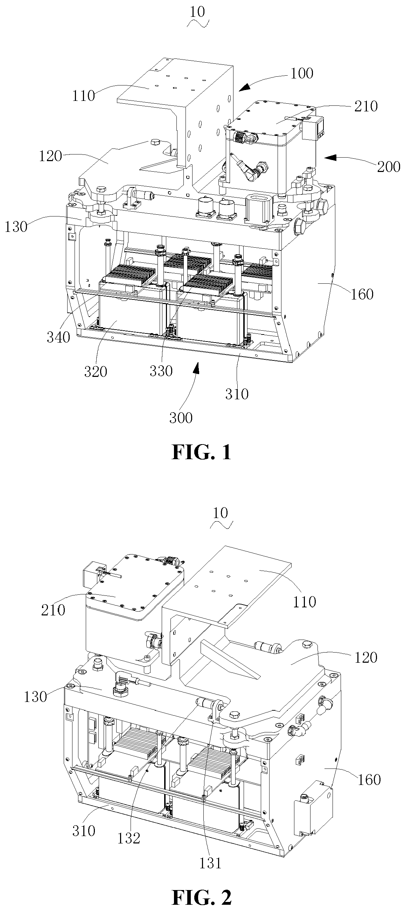

In order to further understand the inventive concept of the 3D printing head, the 3D printing head will be described with reference to specific embodiments. Referring to FIG. 1, a 3D printing head includes: a mounting frame 100, an ink supply component 200, and an inkjet component 300. The ink supply component 200 and the inkjet component 300 are both arranged on the mounting frame 100, the ink supply component 200 is configured to provide a printing liquid material to the inkjet component 300, and the inkjet component 300 is configured to eject ink to a printing work surface to achieve printing.

Specifically, the mounting frame 100 includes a connecting plate 110, a three-point adjustment plate 120 and a cover plate 130, the connecting plate 110 is configured to connect with a driving module and drive the 3D printing head to move, the three-point adjustment plate 120 is arranged on the connecting plate 110, and the cover plate 130 is movably mounted on the three-point adjustment plate 120. In an embodiment, the connecting plate 110 is integrally connected with the three-point adjustment plate 120. In another embodiment, the connecting plate 110 is screwed to the three-point adjustment plate 120. That is, the fixed connection between the connecting plate 110 and the three-point adjustment plate 120 have various forms such as an integrated or detachable connection, which is not specifically limited in this embodiment. In an embodiment, the connecting plate 110 includes a connecting portion and a mounting portion which are perpendicular to each other, the bottom end of the connecting portion is connected with the three-point adjustment plate 120, and the mounting portion is connected with the driving module of the 3D printing head. By providing the connecting plate 110, the ink supply component 200 and the inkjet component 300 carried on the three-point adjustment plate 120 can print synchronously following the movement of the driving module. In an embodiment, the cover plate 130 is a rectangular flat plate, and the three-point adjustment plate 120 is a triangular flat plate. It should be noted that the cross-sectional area of the three-point adjustment plate 120 is smaller than the cross-sectional area of the cover plate 130, which facilitates the cover plate 130 to carry the three-point adjustment plate 120 and other components.

In order to flexibly adjust the vertical distance and levelness between the printing base plate and the printing work surface, it is necessary to adjust the mounting distance and angle between the three-point adjustment plate 120 and the cover plate 130 whenever necessary according to the working conditions, so as to adjust the distance and angle between the printing base plate connected with the cover plate and the printing work surface. Therefore, it should be emphasized that the cover plate 130 and the three-point adjustment plate 120 are mounted in a movable connection manner. In an embodiment, the mounting distance between the three-point adjustment plate 120 and the cover plate 130 is adjusted by bolts. In other words, the three-point adjustment plate 120 and the cover plate 130 are connected by bolts capable of adjusting distance. In an embodiment, the adjustment range of the mounting distance is 3mm to 3.5mm. Preferably, the mounting distance is 3.2mm. Specifically, threaded clearance holes are respectively formed at the three corners of a lower end surface of the three-point adjustment plate 120, so that the bolt connection is realized through the bolts and the threaded holes of the cover plate 130 corresponding to positions of the three points, thereby realizing the adjustable distance between the printing base plate connected with the cover plate and the printing work surface. Besides, based on actual experience and test results, the inkjet effect is generally the best when the adjustment distance is controlled between 3mm and 3.5mm.

Referring to FIG. 2, in order to achieve more precise adjustment of the horizontal straightness between the printing base plate and the printing work surface, in an embodiment, the cover plate 130 is provided with positioning seats 131 corresponding to positions of the three points of the three-point adjustment plate 120, and a micrometer head 132 is mounted on each positioning seat 131 for adjusting the horizontal straightness of the three-point adjustment plate 120. That is, one positioning seat 131 may be provided at each of the three points of the three-point adjustment plate 120, and one micrometer head 132 is correspondingly mounted on each positioning seat 131. It is also possible that positioning seats 131 are correspondingly provided at two of the three points, and one micrometer head 132 is correspondingly mounted on each positioning seat 131. Preferably, positioning seats 131 and micrometer heads 132 are respectively provided at two points on the short side of the three-point adjustment plate 120, and the other point of the three-point adjustment plate 120 is fixedly arranged on the cover plate. That is to say, the other point is configured as a fixed rotation point, and the corresponding micrometer heads 132 at the other two points cooperate with the positioning seats 131 to abut against the three-point adjustment plate 120. In this way, when the rotation lengths of the micrometer heads 132 on two sides of the three-point adjustment plate 120 are the same and the three-point adjustment plate 120 is firmly abutted, the entire 3D printing head is automatically calibrated, forming a stable triangular structure. In this way, compared with the previous adjustment method using four or more points, this adjustment method has the following advantages: firstly, the adjustment points and operation points are reduced, which helps to reduce the labor intensity of commissioning personnel; secondly, the principle of precision adjustment is optimized, and the three-point adjustment forms a triangular stable structure, which is firm and stable; and most importantly, the three-point adjustment can be automatically calibrated and quickly positioned, which greatly reduces the difficulty of straightness adjustment, the proficiency requirements for personnel, working hours and labor costs.

Further, one end of the micrometer head 132 has a knob, and the other end is a push rod, and the push rod abuts against the three-point adjustment plate 120 in a horizontal direction. Specifically, the micrometer head 132 has an external thread, which is screwed into the internal thread of the corresponding positioning seat 131 to form a fixed matching structure. The knob is arranged at one end of the micrometer head 132, and the micrometer head can be adjusted by turning the knob to match a feeding amount of the positioning seat. The other end of the micrometer head 132 is provided with the push rod for expansion and contraction with graduation. When adjusting the horizontal straightness of the entire printing mechanism, an end face of the push rod contacts a corresponding end face of the three-point adjustment plate 120 to form a pushing effect. In this way, for the conventional adjustment method of screw-in or screw-out of thread pitch by means of jackscrew, due to the problem of its own insufficient thread accuracy, in the actual adjustment process, it is easy to over-adjust or under-adjust when screwing, which makes it difficult to find the balance point. The printing mechanism in this embodiment adopts the micrometer head to replace the jackscrew adjustment, which can achieve precise adjustment of nearly 0.01mm, which greatly improves the adjustment accuracy of straightness and refinement of the operation, making high-precision adjustment possible.

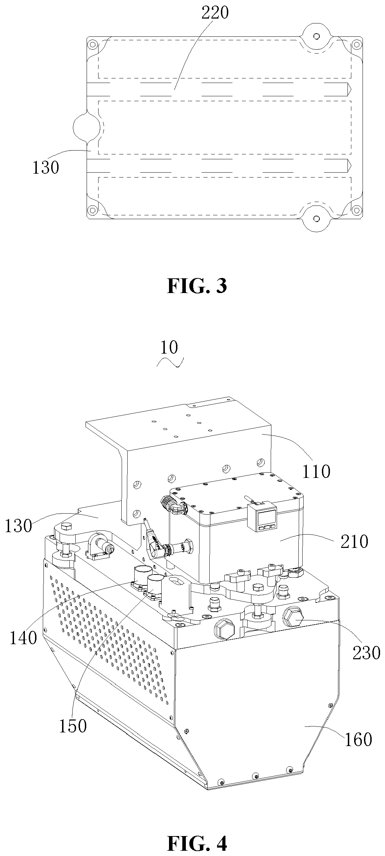

Referring to FIG. 3, the ink supply component 200 includes an ink cartridge 210 and a shunt pipe 220 communicating with each other, the ink cartridge 210 is mounted on the three-point adjustment plate 120, and the shunt pipe 220 is arranged on the cover plate 130. In this way, by mounting the ink cartridge 210 on the three-point adjustment plate 120, the outside placement of the ink cartridge 210 is realized, which prevents heating the ink cartridge due to the heating of the driving board in the case of the ink cartridge being arranged inside the printing mechanism, which may change the ink temperature, and then cause the ink viscosity to change and adversely affect the inkjet quality to drop. In an embodiment, the cover plate 130 is provided with a shunt groove, and the shunt pipe is formed in the shunt groove. That is, the above-mentioned shunt pipe is formed by arranging the groove structure inside the cover plate 130, and there is no need to separately provide the shunt pipe, which further saves space. In an embodiment, a temperature sensor is provided on the ink cartridge to detect the ink temperature in the ink cartridge in real time. In this way, it is convenient for the operator to monitor the temperature of the ink cartridge in time to make corresponding operational adjustments. In an embodiment, the ink cartridge is a box made of a non-metallic material. Preferably, the ink cartridge 210 is a plastic box. In this way, the thermal conductivity of the ink cartridge is reduced by setting the ink cartridge as a non-metallic material, so that the sensitivity of the ink cartridge to external temperature is reduced, thus ensuring that the ink temperature in the ink cartridge is kept in a relatively stable use state. In a specific embodiment, a negative pressure joint and a negative pressure sensor are provided on the ink cartridge 210, the negative pressure joint is connected to a gas source system, and the negative pressure sensor is configured to detect the negative pressure value of the ink cartridge 210. In this way, by real-time detection of the pressure in the ink cartridge, it helps to ensure that the nozzle connected to the ink cartridge up-draws the ink when printing is stopped. In a specific embodiment, the ink cartridge 210 is further provided with a liquid inlet joint, a liquid supply joint and a liquid level sensor, wherein the liquid inlet joint is externally connected with an ink system, and the liquid supply joint is connected with the nozzle, and the liquid level sensor is configured to detect the liquid level of the ink cartridge to ensure real-time detection and timely ink supply. In an embodiment, the shunt pipe 220 includes multiple branch pipes, and the branch pipes communicate with each other. Specifically, the adjacent branch pipes may be detachably communicated with each other through a connecting pipe, so that each branch pipe of the shunt pipe maintains a balanced liquid supply. Further, referring to FIG. 4 together, a sealing plug 230 is provided at the end of each branch pipe. In this way, when the liquid supply needs to be adjusted, the sealing plug 230 may be mounted after the connecting pipe at the end of the branch pipe is removed. Compared with a number of connecting pipes connected by insertion between the ink cartridge and the nozzle in the conventional technology, the mounting and maintenance cost of the apparatus is greatly reduced by providing the shunt pipe.

Referring to FIGS. 1 and 2 again, the inkjet component 300 includes a printing base plate 310, a nozzle 320, and a driving board 330, the printing base plate 310 is connected to the cover plate 130, the nozzle 320 is mounted on the printing base plate 310 and communicated with the shunt pipe 220, and the driving board 330 is inserted into the nozzle 320 for controlling the nozzle to eject ink. Multiple jets are provided on the printing base plate 310, that is, multiple jets correspond to one nozzle. The driving board 330 is an electrical component configured to detect and extract ejection data of the jets. For the specific model and data transmission principle, reference can be made to the technical literature about the printing mechanism control system in the conventional technology, which will not be described in detail in this embodiment. The printing base plate 310 is connected with the cover plate 130, so that the printing base plate 310 carrying the nozzle 320 and the driving board 330 is mounted on the cover plate.

Referring to FIG. 4 together, in an embodiment, a power plug 140 and an optical fiber protection box 150 are provided on the cover plate 130. The optical fiber protection box 150 and the power plug 140 are configured to connect with the driving board 330. Specifically, the print server of the driving board 330 and the driving board 330 realize optical fiber communication connection through the optical fiber protection box 150, so that the network cable is replaced, which effectively improves the signal transmission efficiency, reduces the line connection, and further reduces the probability of signal interruption failure. In this way, the power plug and the optical fiber protection box are mounted on the cover plate 130, and the cover plate 130 and the three-point adjustment plate 120 are never separated. In this way, when dismounting, it only requires to power off the system and directly dismount the part below the cover plate 130, and the cable remains plugged into the corresponding socket on the cover plate 130, so that repeated precision adjustment process can be avoided for subsequent reinstallation, and the operation difficulty and workload of personnel can be fully reduced.

In an embodiment, side plates 160 are mounted on two sides of the cover plate 130, and the printing base plate 310 is mounted between the two side plates. In this way, a mounting frame structure is formed between the cover plate, the two side plates and the printing base plate, and the nozzle and the driving board are integrated in the mounting frame. Further, the driving board 330 is inserted into the nozzle 320 to effectively reduce the overall structure of the printing mechanism, and the insertion method is more conducive to stable data transmission. The nozzle 320 is connected to the shunt pipe 220 through a connecting pipe. Specifically, two ends of the nozzle are respectively provided with joints, and correspondingly, the shunt pipe is provided with liquid outlet joints, and the liquid outlet joint is connected to the joint by the connecting pipe. In an embodiment, multiple nozzles 320 are provided, and the nozzles 320 are arranged in an array on the printing base plate 310, and each column of the nozzles 320 is arranged corresponding to one of the branch pipes. In this embodiment, four nozzles of two pairs are arranged in parallel, and two branch pipes are correspondingly arranged on the cover plate, each branch pipe corresponds to a column of nozzles, each column of nozzles has four joints, and four liquid outlet joints are correspondingly arranged on the branch pipe. In this way, by providing the shunt pipe with multiple branch pipes and making each branch pipe correspond to a column of nozzles on the printing base plate, it is beneficial for reducing the branch pipes and improving the ink supply efficiency.

In order to avoid the problem of data loss caused by shaking of the driving board during printing, in an embodiment, two ends of the cover plate 130 are connected with a fixing rib 340, the fixing rib 340 is connected with the driving board 330 in an insulated manner, and is configured to limit the displacement of the driving board 330. Further, the fixing rib 340 and the driving board 330 are correspondingly provided with threaded holes, and an insulating bolt penetrates through the correspondingly provided threaded holes. That is, the fixing rib 340 is provided with a threaded hole, and the driving board 330 is correspondingly provided with a threaded hole, and an insulating bolt penetrates through the threaded holes between the two components. That is to say, the driving board 330 is connected with the fixing rib 340 mounted on the cover plate through the insulating bolt, which is beneficial for reducing the shaking amplitude of the driving board 330 in the printing process and preventing problems such as data loss and pin damage. In an embodiment, the fixing rib 340 adopts teflon surface treatment. That is, under the premise of ensuring insulation, the fixed rib is used to additionally support the driving board of the nozzle to ensure that the driving board may not shake significantly during the movement of the printing mechanism, and prevent problems such as data loss and pin damage.

In above-mentioned 3D printing head, by mounting the ink cartridge on the three-point adjustment plate, the outside placement of the ink cartridge is realized, which effectively avoids heating the ink cartridge due to the heating of the driving board, which may change the ink temperature, and then cause the ink viscosity to change and cause the inkjet quality to drop; the outside placement of the ink cartridge makes it possible to simply and effectively cool the ink cartridge by relying on natural wind during the printing process; in addition, the three-point adjustment plate is movably mounted on the cover plate, which is conducive to achieving smooth and efficient adjustment of height and straightness of the printing mechanism. Furthermore, by arranging the shunt pipe on the cover plate, it may effectively replace multiple liquid inlet pipes connected between the ink cartridge and the nozzle, which greatly simplifies the mounting complexity of the printing mechanism and helps to reduce mounting and maintenance costs.

In another embodiment, multiple nozzles are provided on the printing base plate, each nozzle is provided with multiple jets, and the driving board controls each jet to eject ink according to the data electrical signal of the to-be-printed image. It should be noted that the multiple nozzles here refer to two or more. Each nozzle is connected with the driving board, each driving board is connected by a communication cable, and each nozzle is controlled and driven by the driving board to eject ink. The specific number of nozzles may be one or more. In a case that only one nozzle is provided, one driving board is provided corresponding to the nozzle, and in a case that multiple nozzles are provided, each nozzle may correspond to one driving board respectively. It is also possible to integrate multiple nozzles into multiple modules, and each module correspondingly connects with one driving board. That is, N nozzles are integrated into a group of modules, and each module is arranged corresponding to one driving board, where N is a positive integer greater than or equal to 2. Firstly, N nozzles are integrated into modules, and then the modules are mounted on the printing base plate. Preferably, three nozzles are arranged to form one module, and each module corresponds to one driving board. By modularly mounting the nozzles, it is beneficial to controlling the mounting accuracy of the nozzles and guaranteeing the processing accuracy of the printing head base plate.

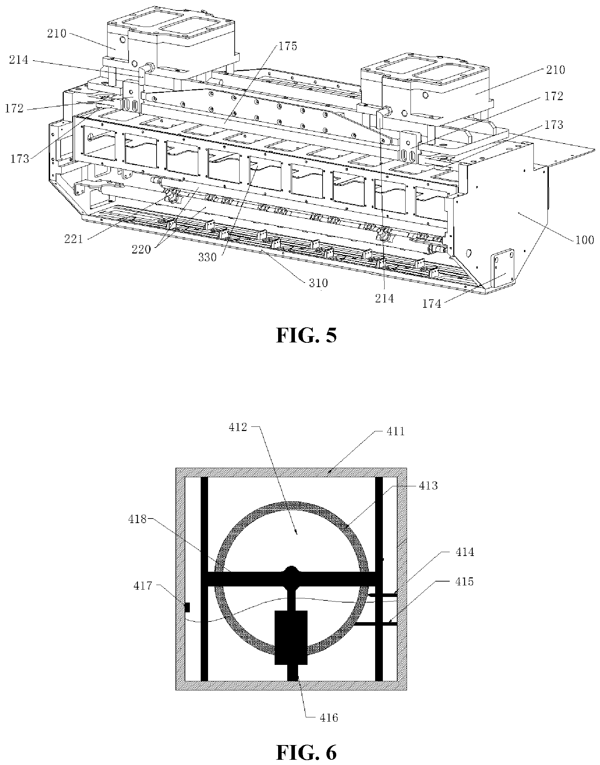

The mounting frame in the above embodiment includes a connecting plate, a three-point adjustment plate and a cover plate, and the present application further provides a different mounting frame structure. Specifically, referring to FIG. 5, in this embodiment, the mounting frame 100 includes a mounting plate, an adjustment plate 175 and a support frame, where the mounting plate is configured to connect with the driving module, and the support frame is connected with the adjustment plate 175 for mounting the ink supply component and the inkjet component. The support frame is a main frame structure and is configured to mount the ink supply component and the inkjet component. The mounting plate is connected to the support frame, and may be specifically connected to the top of the support frame to connect with the driving module. The driving module controls and drives the movement of the overall structure of the printing head. Specifically, the inkjet component includes a printing base plate 310 connected to the mounting frame 100, and the printing base plate 310 is configured to mount a nozzle. The adjustment plate 175 specifically includes a rectangular plate, and may further include other structures that cooperate with the rectangular plate as required, and is mainly configured to adjust the horizontal straightness of the printing base plate 310 from the printing work surface. Specifically, parallelism adjustment blocks 172 and perpendicularity adjustment blocks 173 are mounted on two sides of the adjustment plate 175, and the parallelism adjustment blocks 172 are mounted on the two sides of the adjustment plate 175. If the overall mounting of the printing head is not parallel to a stepping direction of the printing head, the parallelism adjustment blocks 172 on two sides may be tightened or loosened to cause the printing head to parallel the stepping direction module; if the printing base plate 310 is not parallel to the sand surface, that is, if the printing head is not perpendicular to the sand surface, the perpendicularity adjustment blocks 173 mounted on the adjustment plate 175 may be adjusted to adjust the perpendicularity.

In an embodiment, multiple ink cartridges 210 are provided, one end of an ink supply pipe of each ink cartridge 210 is connected with a liquid supply joint 214 of the ink cartridge 210, and another end of the ink supply pipe is connected with a liquid inlet joint of the shunt pipe 220. The shunt pipe 220 has multiple liquid outlet joints 221, and every two liquid outlet joints 221 of the shunt pipe 220 are respectively connected to two ink supply joints of one nozzle. For example, one ink cartridge 210 is mounted on each of the left and right ends of the mounting frame 100, and the shunt pipe 220 has one liquid inlet joint and multiple liquid outlet joints 221. The liquid inlet joint of the shunt pipe 220 is connected to the liquid supply joint 214 of the ink cartridge 210, and every two liquid outlet joints 221 of the shunt pipe 220 correspond to the two ink supply joints of one nozzle to supply ink to the corresponding nozzle.

In a case that the ink cartridge 210 is mounted outside the mounting frame 100, the ink is delivered to the ink chamber of each nozzle in the mounting frame 100 through the ink supply pipe and the shunt pipe 220. According to needs, the ink cartridge 210 may be mounted in the mounting frame 100, for example, the ink cartridge 210 is mounted in the mounting frame 100 and is close to the nozzle. The ink cartridge 210 may be specifically mounted above the nozzle, so that the ink may vertically enter the ink chamber of the nozzle. Specifically, multiple nozzles share one ink cartridge 210 to facilitate the ink supply of the nozzles and the stability of the negative pressure in the ink cartridge 210.

Specifically, the shunt pipe 220 includes a main pipe and multiple parallel branch pipes connected with the main pipe, where the main pipe is provided with a liquid inlet joint, and each branch pipe is respectively provided with two liquid outlet joints 221. Each branch pipe is connected to the mounting frame 100 and is located above and parallel to the printing base plate 310. The liquid material of the ink cartridge 210 passes through the main pipe and then enters the corresponding nozzles through the branching effect of the branch pipes, and the branch pipes are parallel to the printing base plate 310 to supply ink to the nozzles on the printing base plate 310. Specifically, two ends of each branch pipe are respectively fixedly connected with a connecting bracket, and the connecting bracket is fixedly connected with the mounting frame 100, such as a screw connection. The connecting bracket may specifically be an L-shaped plate, one side of the L-shaped plate is fixedly connected to the branch pipe, and another side is fixedly connected to the mounting frame 100.

In an embodiment, the mounting frame 100 includes a protective cover, and the protective cover is arranged around the inkjet component. The protective cover is arranged around the inkjet component, that is, a protective structure is provided around the inkjet component, and the inkjet component is protected by the protective cover. Specifically, the structure of the protective cover may be configured as required, and will not be specifically limited here. In a case that the ink cartridge 210 is mounted in the mounting frame 100, that is, contained in the protective cover, the ink cartridge 210 is close to the nozzle to reduce the length of the infusion pipeline, which is beneficial to efficient ink ejection; in a case that the ink cartridge 210 is mounted outside the mounting frame 100, that is, the ink cartridge 210 is mounted outside the protective cover, the ink cartridge 210 may be specifically mounted on the adjustment plate 175. Such an external arrangement is beneficial to the heat dissipation of the ink cartridge 210, which is more conducive to ensuring the ink supply quality. It should be noted that the 3D printing head may be selected according to the needs of the applicable 3D printer model to select the 3D printing head suitable for the above two structures.

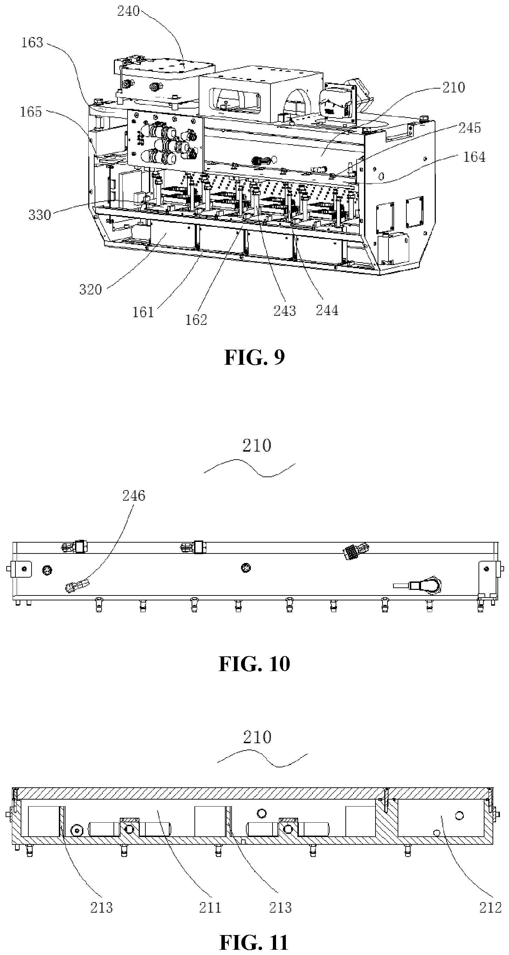

The mounting frame is not limited to the structure of the above-mentioned embodiments. In another embodiment, referring to FIG. 9, the mounting frame includes two opposite side plates and multiple transverse ribs connected with the two side plates, and the nozzle 320 is arranged on a transverse rib located at the bottom. That is to say, the inkjet frame is composed of the two opposite side plates and the multiple transverse ribs, and the number of transverse ribs may be specifically determined as required. As shown in FIG. 9, three layers of transverse ribs are provided, and each transverse rib preferably adopts a hollow square pipe. It should be noted that the nozzle 320 is mounted on the transverse rib at the bottom, which means that the nozzle 320 is arranged on the transverse rib close to the bottom. In the case of multiple layers of transverse ribs, the nozzle 320 is, for example, arranged on the last or second to last layer of transverse rib from top to bottom. Preferably, the nozzle 320 is arranged on the bottommost transverse rib, that is, the nozzle 320 is located at the lowest end of the inkjet component, so that the ink ejection of the nozzle 320 with such arrangement is not blocked or interfered by a lower transverse rib. In the case where three layers of transverse ribs are provided as shown in FIG. 9, the transverse ribs include a bottom rib 161, a middle rib 162 and a top rib 163, and the nozzle 320 is preferably mounted on the bottom rib 161.

Specifically, multiple nozzles 320 are provided, and the multiple nozzles 320 are arranged in an array along the transverse rib. Specifically, the nozzles 320 may be arranged in an array of two rows on the transverse rib at the bottom. For example, the nozzles are arranged in an array along the bottom rib 161. In this embodiment, there are two rows of nozzles 320, and each row is provided with four groups of nozzles 320. That is, there are totally eight groups of nozzles 320, the eight groups of nozzles 320 are symmetrically arranged in two rows on the bottom rib 161. The arrangement of the nozzles 320 may be expanded or extended according to the length and width of the inkjet frame, so that the nozzles 320 fully cover the space enclosed by the bottom rib 161 of the inkjet frame. According to the number of nozzles 320, several nozzles 320 serve as one group, and several groups may be provided.

Further, the driving board 330 is arranged above the nozzle 320, or the driving board 330 is directly seated on the nozzle 320, and is configured to drive the nozzle 320 to work. In the case of multiple nozzles 320, several nozzles 320 form one group, and several groups are provided. Each group of nozzles 320 is provided with one driving board 330, and the driving board 330 is configured to provide spraying power for the nozzles 320. In order to prevent the nozzle 320 from fail to work normally caused by shifting of the driving board 330 during the operation of the inkjet component, the driving board 330 is fixedly connected to the transverse rib in the middle. In the case where the transverse ribs include the bottom rib 161, the middle rib 162, and the top rib 163 described above, it is preferable to fix one corner of the driving board 330 to the middle rib 162.

Furthermore, the oppositely arranged side plates are both provided with guide grooves 165, a partition plate 164 is slidably mounted in the guide grooves 165, the partition plate 164 is configured to support the ink cartridge 210, and a fixing member for locking or unlocking the partition plate 164 and the side plate is arranged in cooperation with the partition plate 164. The ink cartridge 210 is arranged in the middle of the ink supply frame and supported by the partition plate 164. That is, in normal use, the partition plate 164 is locked in the guide grooves 165 by the fixing member to prevent the partition plate 164 from sliding out of the guide grooves 165 during the operation of the inkjet component. When maintenance is required, the fixing member is unlocked, and the partition plate 164 can be pulled out from the guide grooves 165. Specifically, the partition plate 164 is provided above the driving board 330, the partition plate 164 is clamped in the middle of the inkjet component through the guide grooves 165 provided on the side plates, and the partition plate 164 is slidable along the guide grooves 165. The partition plate 164 provides support for the ink cartridge 210, that is, the ink cartridge 210 is placed on the partition plate 164. The fixing member may specifically be a locking screw provided at the edge of the guide groove 165 and the side plate, and the locking screw is configured to lock and position the partition plate 164 and the ink cartridge 210. When the ink cartridge 210 needs maintenance, it is only required to pull out the partition plate 164, which solves the problem that the ink cartridge 210 needs to be removed from the mounting frame before maintenance.

As another improvement of this embodiment, the transverse rib located in the middle is provided with multiple through holes, and the through holes are configured to admit compressed air to cool the driving board 330. In the case that the transverse ribs include the bottom rib 161, the middle rib 162 and the top rib 163, multiple through holes are formed on the surface of the middle rib 162 facing the driving board 330, and compressed cold gas is admitted into the middle rib 162 by means of an external compressed cold gas source. Compressed cold gas blows to the driving board 330 through the through holes provided on the middle rib 162, thus providing the driving board 330 with a gas cooling method besides the inherent cooler, accelerating the cooling of the driving board 330, and avoiding the change of liquid material temperature in the nozzle 320 caused by the heating of the driving board 330. As the heat generated by the driving board 330 is completely carried out by gas cooling, the corrosion of the nozzle 320 by the liquid material caused by the temperature change of the liquid material is avoided or greatly reduced, the corrosion rate of the nozzle 320 by the liquid material is alleviated, and the service life of the nozzle 320 is prolonged indirectly.

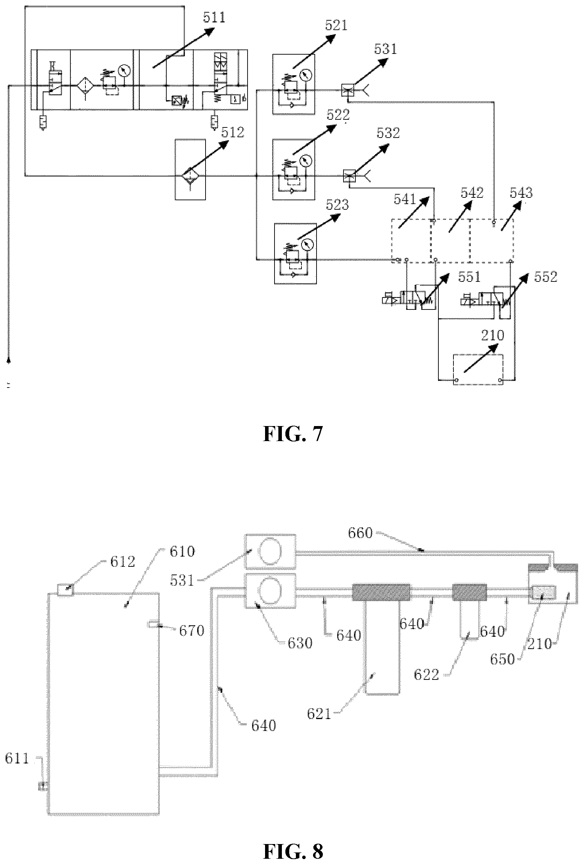

In each of the foregoing embodiments, specifically, a foam destroyer 650 is mounted at the ink inlet of the ink cartridge 210, as shown in FIG. 8. The provision of the foam destroyer 650 prevents gas bubbles from entering the ink cartridge 210. The foam destroyer 650 may specifically be a device that uses centrifugal force to break foam and separate gas from liquid.

According to needs, a degassing chamber is provided at an outer edge of the ink cartridge 210. The arrangement of the degassing chamber facilitates the secondary degassing of the ink in the ink cartridge 210, thereby ensuring that the ink added to the nozzle 320 has a low gas content and does not block the jets. That is, by providing a chamber structure at the outer edge of the ink cartridge 210, a gas-liquid separation structure may be formed in the chamber through the extension of the wall surface and son on, so as to further degas the ink. For the details of the degassing chamber, reference may be made to the conventional technology.

On the basis of the foregoing embodiments, in order to better supply liquid to the ink cartridge 210, referring to FIG. 8, the ink supply component further includes a liquid material tank 610, a liquid supply pump 630, and a liquid supply filter. The liquid supply pump 630 and the liquid supply filter are communicatively arranged between the liquid material tank 610 and the ink cartridge 210. Specifically, the various components may be connected through liquid material pipes 640, and if the layout permits, the adjacent components may also be directly connected through a joint. The liquid supply pump 630 is mounted at the rear end of the liquid material tank 610, and the ink is pumped out by the liquid supply pump 630, and then enters the liquid supply filter to be filtered, and then the filtered ink enters the ink cartridge 210. The liquid supply pump 630 and the liquid supply filter are connected between the liquid material tank 610 and the ink cartridge 210. The detailed connection sequence of the liquid supply pump 630 and the liquid supply filter may be determined as required. FIG. 8 shows that the liquid supply pump 630 and the liquid supply filter are sequentially connected between the liquid material tank 610 and the ink cartridge 210, and the positions of the liquid supply pump 630 and the liquid supply filter may be exchanged as required.

Further, the liquid supply filter includes a primary filter 621 connected to an outlet of the liquid supply pump 630 and a secondary filter 622 connected to an outlet of the primary filter 621. It should be noted that the connection here refers to that the connected components are communicated with each other through the connection. That is, the ink enters the ink cartridge 210 after being filtered by the primary filter 621 and then filtered by the secondary filter 622. Through multi-stage filtration, the filtration accuracy of ink is ensured to improve the printing effect. Apparently, the filtration grade of the primary filter 621 should not be greater than the filtration grade of the secondary filter 622. The specific structures and working principle of the primary filter 621 and the secondary filter 622 may refer to the structure of the convention filter in the conventional technology, which are not specifically limited here.

Furthermore, the ink supply component further includes a degassing membrane provided at the outlet of the primary filter 621, and the degassing membrane is configured to remove gas from the ink. The provision of the degassing membrane facilitates the removal of gas in the ink. The degassing membrane is a membrane separation product that uses the principle of diffusion to remove gas in the liquid, such as carbon dioxide, oxygen, and ammonia nitrogen. For its specific structure and working principle, reference can be made to the conventional technology, which will not be repeated here.

Specifically, a liquid level sensor 670 is provided in the liquid material tank 610. The liquid level sensor 670 may be specifically arranged on an inner side wall of the liquid material tank 610 to detect the liquid level in the liquid material tank 610, which is convenient for relevant personnel to know the liquid level in the liquid material tank 610 in time, or to monitor the liquid level in the liquid material tank 610 by providing a control module. Furthermore, an exhaust device 612 is provided on the top of the liquid material tank 610 to facilitate the exhaust of the liquid material tank 610. The specific structure of the exhaust device 612 may refer to the conventional technology.

The gas inlet of the ink cartridge 210 is specifically arranged on the top of the ink cartridge 210.

On the basis of the foregoing embodiments, referring to FIGS. 9 to 11, in order to prevent the static liquid material from blocking the nozzle 320, the ink supply component further includes a negative pressure box 240 connected to the ink cartridge 210. The ink cartridge 210 has an ink supply chamber 211 and an ink return chamber 212, the negative pressure box 240 has an ink supply negative pressure chamber 241 and an ink return negative pressure chamber 242, the ink supply chamber 211 is in communication with the ink supply negative pressure chamber 241, and the ink return chamber 212 is in communication with the ink return negative pressure chamber 242. The ink supply chamber 211 is configured to provide liquid material to the nozzle 320, and the ink return chamber 212 is configured to collect the liquid material from the nozzle 320. The ink supply negative pressure chamber 241 is configured to provide negative pressure for the ink supply chamber 211 to cause the nozzle 320 to eject ink. The ink return negative pressure chamber 242 is configured to provide negative pressure for the ink return chamber 212, so as to realize the backflow of part of the liquid material of the nozzle 320. The liquid material flows into the nozzle 320 from the ink supply chamber 211 under the action of its own weight, and the nozzle 320 performs ejection action under the action of the ink supply negative pressure chamber 241, that is, the nozzle 320 performs printing operation. In the meantime, part of the liquid material flows back from the nozzle 320 to the ink return chamber 212 under the action of the ink return negative pressure chamber 242, thereby realizing the circulation of the liquid material in each nozzle 320 and addressing the problem that the nozzle 320 is easily blocked by the static liquid material.

Through the above structure, the uninterrupted circulating flow of the liquid material in the nozzle 320 is realized. From another perspective, the liquid material is divided into two parts in the nozzle 320, one part is used for ejection, and the other part is for backflow, thus realizing the circulating flow of the liquid material in the nozzle 320 and preventing the liquid material from being blocked in the nozzle 320 due to the static liquid material. Besides, by providing two independent negative pressures in the nozzle 320, the ejection and circulation of liquid material in the nozzle 320 are relatively independent, thus realizing the circulation of liquid material without affecting the normal operation of the nozzle 320, and avoiding the problem that the nozzle 320 is easily blocked by the static liquid material.

The ink supply component with the above structure is mainly suitable for 3D printers, especially for a sand-type 3D printer which adopts the cooperation of a printing head and a powder spreading device to form a product with a certain shape. The technical solution solves the problems of uneven ejection and the large fluctuation caused by the ink supply method of the diaphragm pump in the existing printing head, and realizes the microcirculation of the liquid material in the nozzle 320.

Specifically, the nozzle 320 is located at the lowest end of the inkjet component, so as to realize the purpose of ejecting liquid on the working surface. The driving board 330 is directly placed on the nozzle 320 and is configured to drive the nozzle 320 to eject according to the setting. The ink cartridge 210 is placed above the driving board 330, and the nozzle 320 is communicated with both the ink supply chamber 211 and the ink return chamber 212 of the ink cartridge 210. Specifically, the ink cartridge 210 is connected with the nozzle 320 through an ink supply pipe 243 and an ink return pipe 244, that is, the ink supply chamber 211 is connected with the nozzle 320 through the ink supply pipe 243, and the ink return chamber 212 is connected with the nozzle 320 through the ink return pipe 244. Through the connection of the ink supply pipe 243 and the ink return pipe 244, a more diverse spatial layout of the ink cartridge 210 and the nozzle 320 may be satisfied. According to requirements, if space permits, the ink supply chamber 211 and the ink return chamber 212 may be directly connected to the nozzle 320 through joints. The negative pressure box 240 is specifically placed above the ink cartridge 210, and is configured to provide negative pressure for the ink cartridge 210 and the nozzle 320, so as to realize the outflow and circulation of liquid material in the ink cartridge 210 and the ejection and rest of the nozzle 320.

As shown in FIGS. 10 to 12, the negative pressure box 240 is provided with the ink supply negative pressure chamber 241 and the ink return negative pressure chamber 242. Specifically, the ink supply negative pressure chamber 241 and the ink return negative pressure chamber 242 are each provided with a negative pressure inlet and a negative pressure outlet, and a negative pressure pipe A is connected with the negative pressure inlet of the ink supply negative pressure chamber 241 to provide negative pressure for the ink supply negative pressure chamber 241. A negative pressure pipe B is connected with the negative pressure inlet of the ink return negative pressure chamber 242 to provide negative pressure for the ink return negative pressure chamber 242. The ink supply negative pressure chamber 241 provides negative pressure for the ink supply chamber 211, and the ink return negative pressure chamber 242 provides negative pressure for the ink return chamber 212. Therefore, the negative pressures in the ink return chamber 212 and the ink supply chamber 211 are relatively independent, so that the ejection and ink return flows are independent of each other, which realizes that the liquid flow of the inkjet component can circulate under the condition of normal ejection, that is, realizes the dynamic circulation of the liquid material. In the meantime, since the negative pressures of ejection and ink return are relatively independent, the ejection pressure is not affected by the negative pressure of the return flow, and the ejection operation is not affected.

The ink cartridge 210 is provided with the ink supply chamber 211 and the ink return chamber 212. Multiple liquid material inlets are provided on the ink supply chamber 211, and the liquid material inlets are configured to supply ink into the ink supply chamber 211. Further, a liquid material outlet is provided on the ink return chamber 212, and the liquid material outlet is connected to a liquid material recovery barrel 252. In a case that the ink supply chamber 211 expands along with the array arrangement of the nozzles 320, multiple liquid material inlets may be arranged on the ink supply chamber 211, thus ensuring that the liquid material may be uniformly, sufficiently and stably supplied into the ink supply chamber 211.

As an improvement of this embodiment, multiple dividing plates 213 are provided in the ink supply chamber 211, and the dividing plates 213 divide the entire ink supply chamber 211 into multiple sub-ink supply chambers 211. Each sub-ink supply chamber 211 may specifically supply ink for 2 to 3 nozzles 320. Because of the small volume of the sub-ink supply chamber 211, the obvious shaking of the liquid material may be avoided during the operation of the ink supply component, thus reducing the instability of the negative pressure in the nozzle 320 caused by the violent shaking of the liquid material. The instability of the negative pressure in the nozzle adversely affects the printing continuity and the inkjet quality. Specifically, one, or two, or three, or more than three sub-ink supply chamber 211 may be provided to supply liquid material to the nozzle 320. Specifically, each sub-ink supply chamber 211 is provided with a liquid inlet to connect with the liquid material tank 610, and the liquid material tank 610 supplies material to each sub-ink supply chamber 211. That is, the liquid material inlet may be provided above each sub-ink supply chamber 211, so that the liquid material in each sub-ink supply chamber 211 is balanced and sufficient.

In a case where the mounting frame 100 is provided with the side plates, the transverse ribs and the partition plate 164 as shown in FIG. 9, the ink supply pipe 243 and the ink return pipe 244 are arranged between the partition plate 164 and the driving board 330, specifically between the partition plate 164 and the transverse rib in the middle. That is, multiple ink supply pipes 243 and multiple ink return pipes 244 are provided between the partition plate 164 and the nozzle 320. The negative pressure box 240 is specifically arranged on the top rib 163, and the ink cartridge 210 is placed on the partition plate 164. In the case where several nozzles 320 serve as one group and several groups of nozzles 320 are provided, preferably, each group of nozzles 320 is provided with one ink supply pipe 243 and one ink return pipe 244. One end of the ink supply pipe 243 is connected with the nozzle 320, and another end of the ink supply pipe 243 is connected with the ink supply chamber 211. One end of the ink return pipe 244 is connected to the nozzle 320, and another end of the ink return pipe 244 is connected to the ink return chamber 212.

Specifically, an upper end of the ink supply pipe 243 is connected to the ink supply chamber 211 through a through hole provided on the partition plate 164, and a lower end of the ink supply pipe 243 is connected to the nozzle 320. The liquid material flows into the nozzle 320 from the ink supply chamber 211 through the ink supply pipe 243 under the action of its own weight, and the nozzle 320 performs ejection action under the action of the ink supply negative pressure chamber 241, that is, the nozzle 320 performs printing operation. The upper end of the ink return pipe 244 is connected with one end of a right-angled through-plate joint 245 arranged on the partition plate 164, another end of the right-angled through-plate joint 245 is connected with a right-angled pagoda joint 246 arranged on the ink return chamber 212, and the lower end of the ink return chamber 212 is connected with the nozzle 320. Under the action of the ink return negative pressure chamber 242, the liquid material flows back into the ink return chamber 212 from the lower end of the ink return pipe 244 through the ink return pipe 244, the right-angled through-plate joint 245 and the right-angled pagoda joint 246, thereby realizing the circulation of the liquid material in each nozzle 320 and addressing the problem that the static liquid material easily blocks the nozzle 320.

In the case where the ink supply component includes the liquid material tank 610 and the liquid supply pump 630, the liquid supply pump 630 is connected between the liquid material tank 610 and the ink supply chamber 211. Specifically, the liquid material tank 610 is connected with the liquid inlet of the ink supply chamber 211, and is driven by the liquid pump to provide liquid material for the ink supply chamber 211. Preferably, a liquid supply filter 620 is further provided between the liquid material tank 610 and the ink supply chamber 211, that is, the liquid supply pump 630 and the liquid supply filter 620 are communicatively arranged between the liquid material tank 610 and the ink supply chamber 211, so as to further improve the purity of the liquid material entering the ink supply chamber 211 and make the 3D printer work better. For the specific configuration of the liquid supply filter 620, reference can be made to the relevant configuration in the above embodiments, which will not be described in detail here.

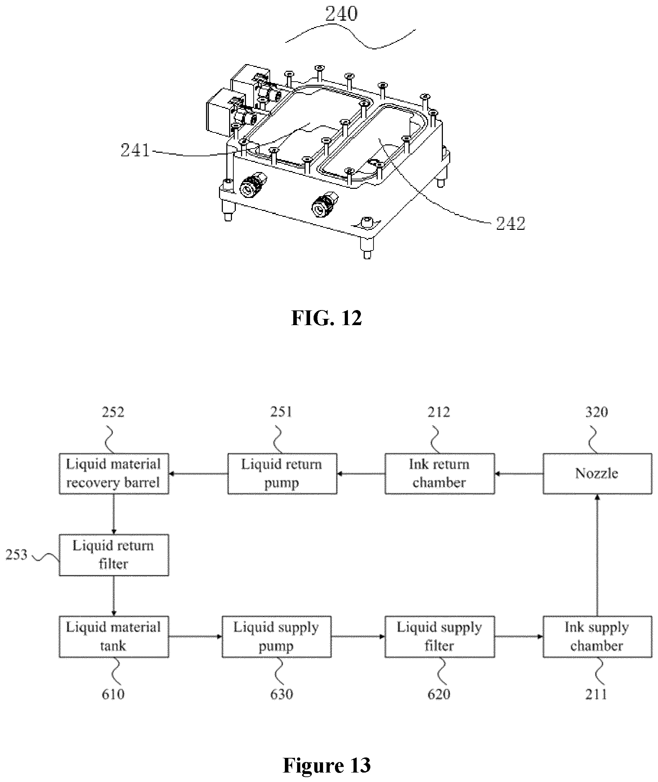

Furthermore, the ink supply component further includes a liquid return pump 251 and a liquid material recovery barrel 252 connected to each other. The liquid return pump 251 is in communication with the ink return chamber 212, and the liquid material recovery barrel 252 is in communication with the liquid material tank 610. Referring to FIG. 13 for details, FIG. 13 is a schematic diagram showing the circulation of the liquid material of the ink supply component 200. The liquid material in the ink return chamber 212 enters the liquid material recovery barrel 252 for recovery under the action of the liquid return pump 251, and the liquid material recovery barrel 252 is connected with the liquid material tank 610, thereby realizing the circulation of the liquid material and avoiding the environmental pollution and waste caused by the outside discharging of liquid material. In order to enable the recovered liquid material to meet the use requirements, the ink supply component includes a liquid return pump 251, a liquid material recovery barrel 252 and a liquid return filter 253 which are connected in sequence. The liquid return pump 251 is communicated with the ink return chamber 212, and the liquid return filter 253 is communicated with the liquid material tank 610. That is, a liquid return filter 253 is further provided between the liquid material recovery barrel 252 and the liquid material tank 610, so that the recovered liquid material is filtered and then enters the liquid material tank 610 for reuse.

More preferably, a liquid level sensor is provided in the ink supply chamber 211 and/or the ink return chamber 212. For the ink supply chamber 211, when the liquid level in the ink supply chamber 211 reaches a set position, that is, when the volume of the liquid material in the ink supply chamber 211 decreases to the minimum amount, the liquid level sensor sends out a liquid filling signal, and a set amount of liquid material may be added into the ink supply chamber 211 manually or automatically under the control of the system. Specifically, the liquid may be added into the ink supply chamber 211 by the liquid supply pump 630, and the liquid supply pump 630 is a liquid adding pump. That is, a liquid level sensor is arranged in the ink supply chamber 211, and the ink supply chamber 211 is connected with the liquid supply pump 630. When the liquid material in the ink supply chamber 211 reaches the set liquid level, the liquid supply pump 630 is started to deliver the liquid material to the ink supply chamber 211, thus ensuring that the ink supply chamber 211 can continuously supply ink to the nozzle 320. For the ink return chamber 212, when the liquid level in the ink return chamber 212 reaches a set position, that is, when the liquid material in the ink return chamber 212 reaches the maximum amount, the liquid level sensor sends a liquid suction signal, and the liquid material in the ink return chamber 212 is pumped out into the liquid material recovery barrel 252. Specifically, the liquid material in the ink return chamber 212 is pumped out by the liquid return pump 251. That is, the ink return chamber 212 is connected with the liquid return pump 251. When the liquid material in the ink return chamber 212 reaches the set liquid level, the liquid return pump 251 is started to deliver the liquid material to the liquid material recovery barrel 252. The liquid return pump 251 is a peristaltic pump. In this embodiment, the ink supply pipes 243 are in one-to-one correspondence with the nozzles 320, that is, each nozzle 320 corresponds to one ink supply pipe 243. The ink return pipes 244 are also in one-to-one correspondence with the nozzles 320, and the upper end of each ink return pipe 244 is connected with multiple right-angled through-plate joints 245 arranged on the partition plate 164. However, there is only one right-angled pagoda joint 246 arranged on the ink return chamber 212, that is, the other ends of the multiple right-angled through-plate joints 245 are collected and connected to the right-angled pagoda joint 246, thus realizing the backflow of liquid material into the ink return chamber 212.

All the above ink supply components may be implemented on 3D printing equipment, so as to improve the inkjet component 300 and ink supply component 200 of 3D printing equipment, improve printing efficiency, realize liquid recycling, and improve the normal running time of the equipment.

On the basis of the foregoing embodiments, the 3D printing head provided by the present application further includes a cleaning component, the cleaning component includes a cleaning tank and a scrubbing member, the cleaning tank is configured to receive cleaning liquid, and the scrubbing member is movably mounted on the cleaning tank for scrubbing the nozzle. During the printing process, a jet plate of the nozzle may be contaminated with a lot of dust and resin droplets, which may affect the inkjet effect. Therefore, through the arrangement of the above-mentioned cleaning component, a cleaning liquid is stored in the cleaning tank, and the scrubbing member is mounted in the cleaning tank, and the nozzle is effectively cleaned by the scrubbing member to ensure the quality of inkjet. The contaminated scrubbing members can be cleaned by the cleaning liquid, and can be reused for cleaning the nozzle again. The specific shape of the cleaning tank is not limited here, which may be set as required.

Referring to FIG. 6 for details, FIG. 6 is a schematic view of a structure of the cleaning component. In an embodiment, the scrubbing member includes a roller wheel 412 and a roller wheel driving member, the roller wheel 412 is rotatably mounted in the cleaning tank 411, and a sponge layer 413 is provided at an outer edge of the roller wheel 412, and the roller wheel driving member is drivingly connected to the roller wheel 412. That is, the roller wheel 412 is rotatably mounted in the cleaning tank 411, and the roller wheel 412 is driven by the roller wheel driving member to rotate. The roller wheel driving member may specifically be a drive device capable of outputting torque, such as a motor. An output shaft of the motor is coaxially connected with a shaft of the roller wheel 412 to drive the roller wheel 412 to rotate. The sponge layer 413 is provided at the outer edge of the roller wheel 412, and it is preferable to wrap an outer peripheral surface of the roller wheel 412 with a circle of the sponge layer 413, so that the rotation of the roller wheel 412 and the movement of the printing head proceed together, and the nozzle 320 is cleaned by the sponge layer 413. Due to the soft texture of the sponge layer 413, the fine dust, resin and other droplets on the jet plate can be effectively cleaned during the cleaning process of the jet without damaging the jet plate, and the jet plate will not be scraped off due to excessive force applied on the jet plate. According to needs, the sponge layer 413 may be replaced with a wiper blade, that is, a wiper blade is fixedly connected to the roller wheel 412, and the nozzle 320 is cleaned by the wiper blade following the rotation of the roller wheel 412. The material of the wiper blade is hard, and the wiper blade itself is not easy to wear and has a long service life. According to needs, the scrubbing member may adopt a structure such as a scrubbing cloth with linear motion.

Further, the scrubbing member further includes a jacking member 416 and a bracket 418, the jacking member 416 is arranged at the bottom of the cleaning tank 411, the bracket 418 is fixedly connected to an output end of the jacking member 416, and the roller wheel 412 is rotatably connected with the bracket 418. That is, the roller wheel 412 is rotatably mounted through the bracket 418, and the output end of the jacking member 416 is fixedly connected with the bracket 418, thereby driving the bracket 418 to move up and down to meet the cleaning requirements of different heights. The specific structure of the bracket 418 may be configured according to requirements. For example, the bracket may include a lateral support member, and the roller wheel 412 is rotatably connected to the lateral support member. Two ends of the lateral support member are respectively provided with longitudinal guide members, so that the lateral support member is able to move up and down along the longitudinal guide members under the action of the jacking member 416. The longitudinal guide member may specifically be a longitudinal guide rail arranged in the up-down direction, and the two ends of the lateral support member have sliding blocks that are slidably matched with the longitudinal guide rail. Specifically, a mounting shaft of the roller wheel 412 extends outside the sponge layer 413 and is rotatably connected with the bracket 418. The jacking member 416 may specifically be a jacking cylinder, the jacking cylinder is fixed at the bottom of the cleaning tank 411, to be specific, at the bottom surface of the cleaning tank 411, and a telescopic rod of the jacking cylinder is fixed on the bracket 418. According to requirements, the jacking member 416 may adopt other driving components such as hydraulic cylinders.

According to needs, in another embodiment, the cleaning component further includes an integral jacking mechanism, the integral jacking mechanism includes a supporting seat and an integral jacking component, wherein the supporting seat is arranged on an edge of the cleaning tank 411, and the integral jacking component is mounted on the supporting seat for jacking or lowering the whole cleaning component. Specifically, the integral jacking component may be a telescopic driving element such as a cylinder, and one end of the telescopic driving element is fixedly mounted to provide supporting force. Another end of the telescopic driving element is fixedly connected with the supporting seat to drive the supporting seat to ascend or descend, and then drive the whole cleaning component fixedly connected with the supporting seat to ascend or descend, thereby further reducing the abrasion of the printing head and the cleaning component in cleaning.

Furthermore, a cleaning brush 415 for cleaning the sponge layer 413 is mounted on an inner wall of the cleaning tank 411. By the arrangement of the cleaning brush 415, the sponge layer 413 can be cleaned. The mounting position of the cleaning brush 415 should be such configured that the head of the cleaning brush 415 is in contact with the sponge layer 413 to clean the sponge layer. For example, the cleaning brush 415 is arranged horizontally, and a tail end, which is the brush handle, of the cleaning brush is fixedly connected with a side wall of the cleaning tank 411, and the head, which is the bristle part, is in contact with the sponge layer 413. Specifically, the bristles of the cleaning brush 415 may be soft bristles made of such as silica gel or plastic.

According to needs, a scraper 414 for squeezing the sponge layer 413 is further provided on the inner wall of the cleaning tank 411. The cleaning liquid absorbed by the sponge layer 413 is squeezed by the scraper 414, and the head of the scraper 414 should abut against the sponge layer 413 to apply pressure to the sponge layer 413 and squeeze the sponge layer dry, so as to better absorb fine dust and resin droplets on the surface of the nozzle.

Specifically, the scraper 414 is located above the cleaning brush 415, and the liquid level of the cleaning liquid is located between the scraper 414 and the cleaning brush 415. With the rotation of the roller wheel 412, the sponge layer 413 is cleaned by the cleaning liquid in the cleaning liquid, and the sponge layer 413 is cleaned by the cleaning brush 415. Further, the cleaned sponge layer 413 rotates to the position of the scraper 414, and under the pressure of the scraper 414, the cleaning liquid adsorbed by the sponge layer 413 is squeezed out, and then the sponge layer rotates with the roller wheel to contact with the nozzle to clean the nozzle.

Through the arrangement of the cleaning brush 415 and the scraper 414, the sponge layer 413 can be conveniently cleaned and scraped dry, so as to better clean the nozzle 320. According to needs, the sponge layer 413 may be replaced with a new one after a long term of use, and there is no need to provide the cleaning brush 415 and the scraper 414.

The scrubbing member is not limited to the above-mentioned roller wheel mechanism. According to needs, in another embodiment, the scrubbing member includes a scrubbing mounting plate, a driving member and a cleaning block, the scrubbing mounting plate is rotatably mounted in the cleaning tank, the driving member is connected with the scrubbing mounting plate to drive the scrubbing mounting plate to rotate, and the cleaning block is arranged on the surface of the scrubbing mounting plate. The driving member drives the scrubbing mounting plate and then drives the cleaning block to rotate, so as to scrub the nozzle. Specifically, a rotation angle of the cleaning block may be set according to the scrubbing needs and the size of the cleaning block. When the cleaning block is rotated to where the cleaning block comes into contact with the nozzle 320, the nozzle 320 is scrubbed, and when the cleaning block is rotated to where the cleaning block is immersed in the cleaning liquid, the nozzle 320 is cleaned accordingly. Further, the cleaning block is arranged on the scrubbing mounting plate through a pressing plate. For example, pressing plates are provided at two opposite ends of the cleaning block, and the pressing plates are fixedly connected with the scrubbing mounting plate and the two ends of the cleaning block are pressed between the pressing plate and the scrubbing mounting plate, so as to realize the fixation of the cleaning block. The cleaning block may specifically be made of sponge or flexible materials such as rubber.

In another embodiment, a spraying mechanism is further arranged in the cleaning tank 411, and the spraying mechanism includes a connecting pipe and multiple sprayers, wherein the connecting pipe is arranged on a side of the scrubbing mounting plate, and the sprayers are spaced apart and communicatively arranged on the connecting pipe. That is, a connecting pipe is arranged on a side of the scrubbing mounting plate, and multiple sprayers are arranged in communication with the connecting pipe, and the multiple sprayers are spaced apart, preferably evenly spaced. The cleaning block is sprayed through the sprayers to clean up the cleaning block and better scrub the nozzle. According to requirements, the spraying mechanism may be arranged in other positions in the cleaning tank 411, as long as the jet of the sprayer is directed toward the cleaning block. In the case where the scrubbing member includes the roller wheel 412, the spraying mechanism may be connected to the cleaning tank 411, and the jet of the sprayer is directed toward the roller wheel 412.

In another embodiment, a waste liquid box is provided at the bottom of the cleaning tank 411. Specifically, a valve is provided at the bottom of the cleaning tank 411, and the valve is closed during cleaning. When the cleaning liquid needs to be replaced, the valve is opened, and the waste liquid after cleaning in the cleaning tank 411 flows into the waste liquid box for collection, so as to keep the cleaning liquid in the cleaning tank 411 clean. Specifically, the waste liquid in the waste liquid box may be reused through subsequent purification treatments and the like. According to needs, the cleaning tank 411 and the waste liquid box may be connected by pipelines, and the valve may be specifically arranged in the pipelines.

In order to facilitate the level control of the cleaning liquid in the cleaning tank 411, a liquid level sensor 417 is further provided in the cleaning tank 411. According to the feedback of the liquid level sensor 417, the amount of the cleaning liquid is controlled, and the liquid level can be accurately controlled. For the specific structure and working principle of the liquid level sensor 417, reference can be made to the conventional technology, which will not be repeated here.

On the basis of the foregoing embodiments, the 3D printing head further includes a gas source device cooperating with the ink supply component. Referring to FIG. 7 for details, FIG. 7 is a schematic structural view of a gas source device. The ink cartridge of the ink supply component has at least two gas inlets, the gas source device includes a first negative pressure generator 531 and a second negative pressure generator 532, a gas outlet of the first negative pressure generator 531 and a gas outlet of the second negative pressure generator 532 are respectively connected to the at least two gas inlets of the ink cartridge, so as to admit different negative pressures into the ink cartridge. It should be noted that the connection here refers to that the connected components are communicated with each other through the connection.

The ink cartridge has at least two gas inlets, and the positions of the two gas inlets may be set as required. Specifically, both the first negative pressure generator 531 and the second negative pressure generator 532 may adopt conventional equipment capable of generating negative pressure, such as a negative pressure pump. The first negative pressure generator 531 and the second negative pressure generator 532 are specifically connected to the ink cartridge 210 through a negative pressure pipe 660. In addition, the first negative pressure generator 531 and the second negative pressure generator 532 are connected to different gas inlets of the ink cartridge. According to needs, the first negative pressure generator 531 and the second negative pressure generator 532 may be directly connected with different gas inlets of the ink cartridge through negative pressure joints. In a case that the ink cartridge is provided with two gas inlets, the first negative pressure generator 531 and the second negative pressure generator 532 are respectively connected to different gas inlets of the ink cartridge. In a case that the ink cartridge 210 is provided with three or more gas inlets, the first negative pressure generator 531 may be connected with at least one of the gas inlets of the ink cartridge, and accordingly, the second negative pressure generator 532 may be connected with at least one of the remaining gas inlets of the ink cartridge.

The distance between the gas inlet of the ink cartridge connected with the first negative pressure generator 531 and the gas inlet of the ink cartridge connected with the second negative pressure generator 532 should be as large as possible, so that the ink in the ink cartridge can circulate more fully under the action of pressure difference. If two opposite ends of the ink cartridge are respectively provided with gas inlets, the first negative pressure generator 531 and the second negative pressure generator 532 are accordingly connected with the gas inlets at the two ends.

It should be noted that only one gas inlet of the ink cartridge 210 is shown in FIG. 8, and accordingly, only the first negative pressure generator 531 connected thereto is shown, and the second negative pressure generator 532 is not shown.

Through the arrangement of the first negative pressure generator 531 and the second negative pressure generator 532, negative pressure may be admitted into at least two gas inlets of the ink cartridge at the same time. In this case, a pressure difference is produced by adjusting the negative pressures of the two gas inlets, and the ink in the ink cartridge can circulate to avoid the accumulation of tiny impurities and the resulting blockage of the nozzle of the printing head. Besides, the circulating flow of the ink also avoids the generation of bubbles due to the long-term static of the ink, thereby improving the inkjet accuracy, reducing the waste rate, saving costs, and ensuring quality.

Further, the gas source device further includes a gas source filter component, the gas source filter component is connected with an external gas source, and a gas outlet of the gas source filter component is respectively connected with a gas inlet of the first negative pressure generator 531 and a gas inlet of the second negative pressure generator 532. The gas outlet of the first negative pressure generator 531 and the gas outlet of the second negative pressure generator 532 are respectively connected to different gas inlets of the ink cartridge. It should be noted that the connection here refers to that the connected components are communicated with each other through the connection. That is, the first negative pressure generator 531 and the second negative pressure generator 532 respectively have a gas inlet and a gas outlet, the gas inlets are configured to connect with the external gas source, and the gas outlets are respectively connected to different gas inlets of the ink cartridge. Gas source filter components are respectively arranged between the first negative pressure generator 531, the second negative pressure generator 532 and the external gas source. It is applicable that the first negative pressure generator 531 and the second negative pressure generator 532 share one gas source filter component, or the first negative pressure generator 531 and the second negative pressure generator 532 are respectively connected to different gas source filter components. Through the arrangement of the gas source filter component, the gas entering the ink cartridge is filtered to meet the filter level requirement and avoid the pollution of the ink caused by the introduction of impurities. According to needs, the gas source filter component may not be provided if the gas source meets the requirements.

Specifically, the gas source filter component includes a gas source processor 511 and a fine filter 512, a gas inlet of the gas source processor 511 is connected to the external gas source, a gas inlet of the fine filter 512 is connected with a gas outlet of the gas source processor 511, and a gas outlet of the fine filter 512 is respectively connected with the gas inlet of the first negative pressure generator 531 and the gas inlet of the second negative pressure generator 532. It should be noted that the connection here refers to that the connected components are communicated with each other through the connection. That is, the gas from the external gas source is sequentially filtered by the gas source processor 511 and the fine filter 512, and is filtered through multiple stages to improve the filtering accuracy. Specifically, the gas source processor 511 is configured to filter out water, oil and solid particles in the compressed gas, and the fine filter 512 is configured to further filter the compressed gas already filtered by the gas source processor 511. The specific structures and working principle of the gas source processor 511 and the fine filter 512 may refer to the conventional technology, which are not specifically limited here.

Further, the gas source device further includes a first pressure reducing valve 521 and a second pressure reducing valve 522, the first negative pressure generator 531 is connected to the first pressure reducing valve 521 ahead, and the second negative pressure generator 532 is connected to the second pressure reducing valve 522 ahead. It should be noted that the connection here refers to that the connected components are communicated with each other through the connection. Through the arrangement of the first pressure reducing valve 521 and the second pressure reducing valve 522, the pressure stabilizing function is realized, and the gas supply is stabilized. In the case where the gas source filter component is provided, specifically, the gas outlet of the fine filter 512 is respectively connected to an inlet of the first pressure reducing valve 521 and an inlet of the second pressure reducing valve 522, an outlet of the first pressure reducing valve 521 is connected to the gas inlet of the first negative pressure generator 531, and the outlet of the second pressure reducing valve 522 is connected to the gas inlet of the second negative pressure generator 532. That is, the filtered gas is stabilized by the corresponding pressure reducing valves, and then enters the first negative pressure generator 531 and the second negative pressure generator 532 to ensure the stable gas supply of the first negative pressure generator 531 and the second negative pressure generator 532. For the specific structures and working principle of the first pressure reducing valve 521 and the second pressure reducing valve 522, reference can be made to the conventional technology, which will not be repeated here.

Further, the gas source device further includes a first negative pressure reservoir 543 and a second negative pressure reservoir 542, the gas outlet of the first negative pressure generator 531 is connected to a gas inlet of the first negative pressure reservoir 543, the gas outlet of the second negative pressure generator 532 is connected to a gas inlet of the second negative pressure reservoir 542, a gas outlet of the first negative pressure reservoir 543 and a gas outlet of the second negative pressure reservoir 542 are respectively connected with different gas inlets of the ink cartridge. It should be noted that the connection here refers to that the connected components are communicated with each other through the connection. That is, the negative pressures generated by the first negative pressure generator 531 and the second negative pressure generator 532 are stored in the corresponding first negative pressure reservoir 543 and the second negative pressure reservoir 542 respectively, and then the first negative pressure reservoir 543 and the second negative pressure reservoir 542 supply gas to different gas inlets of the ink cartridge. With the arrangement of the first negative pressure reservoir 543 and the second negative pressure reservoir 542, stable and sufficient negative pressure is ensured. Specifically, the first negative pressure reservoir 543 and the second negative pressure reservoir 542 may be storage devices such as negative pressure boxes. According to requirements, the first negative pressure reservoir 543 and the second negative pressure reservoir 542 may be integrated into an integral pressure box, and the pressure box has at least two isolated chambers to be connected with the first negative pressure generator 531 and the second negative pressure generator 532 respectively.

On the basis of the above embodiments, in order to facilitate the wetting and cleaning of the printing head by the liquid in the ink cartridge, the gas inlet of the ink cartridge is further connected with the external gas source to provide positive pressure to the ink cartridge as required. The specific positive pressure cleaning process may refer to the conventional technology, and will not be repeated here. Specifically, the gas source device further includes a third pressure reducing valve 523 and a positive pressure reservoir 541, wherein an inlet of the third pressure reducing valve 523 is connected with the gas outlet of the fine filter 512, an outlet of the third pressure reducing valve 523 is connected with a gas inlet of the positive pressure reservoir 541, and a gas outlet of the positive pressure reservoir 541 is connected with the gas inlet of the ink cartridge. It should be noted that the connection here refers to that the connected components are communicated with each other through the connection. After the external gas source is filtered by the gas source filter component, to be specific, the external gas source is filtered by the gas source processor 511 and the fine filter 512 in turn, and then the external gas source passes through the third pressure reducing valve 523, and then enters the positive pressure reservoir 541 after being stabilized by the third pressure reducing valve, and the positive pressure reservoir 541 provides stable positive pressure gas to the gas inlet of the ink cartridge. When the printing head needs to be cleaned, the gas passes through the above path to clean the printing head. The positive pressure reservoir 541 may be integrated into a pressure box together with the first negative pressure reservoir 543 and the second negative pressure reservoir 542. The pressure box has at least three chambers to connect with the first negative pressure reservoir 543, the second negative pressure reservoir 542, and the external gas source, respectively.

Furthermore, in order to facilitate the switching between positive pressure and negative pressure and simplify the overall structure, the gas source device further includes a first two-position three-way valve 551, a second two-position three-way valve 552 and a three-way joint, the gas outlet of the positive pressure reservoir 541 is connected with a first gas inlet of the first two-position three-way valve 551, the gas outlet of the second negative pressure reservoir 542 is connected with a second gas inlet of the first two-position three-way valve 551, a gas outlet of the first two-position three-way valve 551 is connected to a first port of the three-way joint, a second port of the three-way joint is connected with a first gas inlet of the second two-position three-way valve 552, a third port of the three-way joint is connected with the first gas inlet of the ink cartridge, the gas outlet of the first negative pressure reservoir 543 is connected with a second gas inlet of the second two-position three-way valve 552, and a gas outlet of the second two-position three-way valve 552 is connected with the second gas inlet of the ink cartridge. It should be noted that the connection here refers to that the connected components are communicated with each other through the connection. Through the above arrangement, when the printing head needs to be cleaned, the first two-position three-way valve 551 and the second two-position three-way valve 552 are controlled to switch to the positive pressure at the same time to clean the printing head. When the printing head does not need to eject ink, the first two-position three-way valve and the second two-position three-way valve 552 are controlled to switch to negative pressure at the same time, that is, negative pressure is supplied to the first gas inlet and the second gas inlet of the ink cartridge at the same time. In this case, a pressure difference is produced by adjusting the negative pressures of the first gas inlet and the second gas inlet, and the ink in the ink cartridge can circulate.

A 3D printing head is further provided according to the present application, which includes a mounting frame, an ink supply component and an inkjet component. The ink supply component includes an ink cartridge, and the ink cartridge is arranged on the mounting frame. The inkjet component includes a nozzle and a driving board arranged on the mounting frame, the nozzle is communicated with the ink cartridge, and the driving board is inserted into the nozzle for controlling the nozzle to eject ink.

That is, in this embodiment, different from the above-mentioned embodiments, the communication between the nozzle and the ink cartridge can be realized by the direct communication between the nozzle and the ink cartridge without the shunting effect of the shunt pipe. For example, each nozzle is communicated with the ink cartridge through its own independent connecting pipe, or each nozzle is directly communicated with the ink cartridge through a joint. For the structures of other parts of the mounting frame, the ink supply component, and the inkjet component, reference may be made to the relevant configurations in the foregoing embodiments, which will not be repeated here. In this embodiment, the driving board is inserted into the nozzle. The insertion method facilitates the assembly of the driving board with the nozzle, and the maintenance is convenient. Specifically, the driving board is inserted into the nozzle and is signal connected with the nozzle by insertion, therefore there is no need to separately provide lines to connect the nozzle with the driving board, thus reducing the line connection, further reducing the occurrence of fault points and saving the mounting space.

Based on the 3D printing head according to the above embodiments, a 3D printer is further provided according to the present application, and the 3D printer includes any 3D printing head in the above embodiments. Since the 3D printing head according to the above embodiments is adopted in the 3D printer, the beneficial effects of the 3D printer may refer to the above embodiments.

Specifically, in an embodiment, a 3D printer includes a 3D printing head. The 3D printing head includes: a mounting frame, an ink supply component, and an inkjet component; the mounting frame includes a connecting plate, a three-point adjustment plate and a cover plate, the connecting plate is configured to connect with a driving module and drive the 3D printing head to move, the three-point adjustment plate is arranged on the connecting plate, and the cover plate is movably mounted on the three-point adjustment plate; the ink supply component includes an ink cartridge and a shunt pipe communicating with each other, the ink cartridge is mounted on the three-point adjustment plate, and the shunt pipe is arranged on the cover plate; the inkjet component includes a printing base plate, a nozzle, and a driving board, the printing base plate is connected to the cover plate, the nozzle is mounted on the printing base plate and communicated with the shunt pipe, and the driving board is inserted into the nozzle for controlling the nozzle to eject ink.

In this 3D printer, the ink cartridge of the printing mechanism is placed outside on the three-point adjustment plate, which effectively avoids heating the ink cartridge due to the heating of the driving board, which may change the ink temperature, and then cause the ink viscosity to change and cause the inkjet quality to drop; the outside placement of the ink cartridge makes it possible to simply and effectively cool the ink cartridge by relying on natural wind during the printing process; in addition, the three-point adjustment plate is movably mounted on the cover plate, which is conducive to achieving smooth and efficient adjustment of height and straightness of the printing mechanism. Furthermore, by arranging the shunt pipe on the cover plate, it may effectively replace multiple liquid inlet pipes connected between the ink cartridge and the nozzle, which greatly simplifies the mounting complexity of the printing mechanism and helps to reduce mounting and maintenance costs.

Technical features of the foregoing embodiments may be combined freely. For conciseness of description, all possible combinations of the technical features of the foregoing embodiments are not described. However, as long as there is no contradiction in the combinations of these technical features, they shall fall within the scope of this specification.

Only some embodiments of the present application are described specifically and in detail in the above content, which should not be taken as limitation to the scope of the present application. Therefore, the protection scope of the present application should be determined by the appended claims.

## Claims

1. A 3D printing head, comprising a mounting frame (100), an ink supply component (200) and an inkjet component (300);
the ink supply component (200) comprises an ink cartridge, and the ink cartridge is arranged on the mounting frame (100); and
the inkjet component (300) comprises a nozzle (320) and a driving board (330) arranged on the mounting frame (100), the nozzle (320) is in fluid communication with the ink cartridge, and the driving board (330) is connected with the nozzle (320) by insertion for controlling the nozzle (320) to eject ink,
the 3D printing head is **characterized in that**,
the ink supply component (200) further comprises a negative pressure box (240), the ink cartridge has an ink supply chamber (211) and an ink return chamber (212), the negative pressure box (240) has an ink supply negative pressure chamber (241) and an ink return negative pressure chamber (242), the ink supply chamber (211) is in fluid communication with the ink supply negative pressure chamber (241), and the ink return chamber (212) is in fluid communication with the ink return negative pressure chamber (242); and
the nozzle (320) is in fluid communication with the ink supply chamber (211) and the ink return chamber (212) of the ink cartridge.

2. The 3D printing head according to claim 1, wherein
the ink supply component (200) further comprises a shunt pipe (220) that is in fluid communication with the ink cartridge; the shunt pipe (220) is a pipe configured to realize fluid communication between the nozzle (320) and the ink cartridge, and
the nozzle (320) is in fluid communication with the shunt pipe (220).

3. The 3D printing head according to claim 2, wherein the mounting frame (100) comprises a connecting plate (110), a three-point adjustment plate (120) and a cover plate (130), the connecting plate (110) is configured to connect with a driving module and drive the 3D printing head to move, the three-point adjustment plate (120) is arranged on the connecting plate (110), and the cover plate (130) is movably mounted on the three-point adjustment plate (120);
the ink cartridge is mounted on the three-point adjustment plate (120), and the shunt pipe (220) is arranged on the cover plate (130); and
the inkjet component (300) further comprises a printing base plate (310), the printing base plate (310) is connected to the cover plate (130), and the nozzle (320) is mounted on the printing base plate (310).

4. The 3D printing head according to claim 3, wherein the shunt pipe (220) comprises a plurality of branch pipes, and the branch pipes are in fluid communication with each other; and
a plurality of nozzle (320)s are provided, and the plurality of nozzle (320)s are arranged in an array on the printing base plate (310), and each column of the nozzle (320)s is arranged corresponding to one of the branch pipes.

5. The 3D printing head according to claim 3, wherein the cover plate (130) is provided with positioning seats (131) corresponding to positions of three points of the three-point adjustment plate (120), and a micrometer head (132) is mounted on each positioning seat (131) for adjusting horizontal straightness of the three-point adjustment plate (120).

6. The 3D printing head according to claim 2, wherein the mounting frame (100) comprises two opposite side plates (160) and a plurality of transverse ribs connecting the two side plates (160), and the nozzle (320) is arranged on a transverse rib located at the bottom.

7. The 3D printing head according to claim 6, wherein the transverse rib located in the middle is provided with a plurality of through holes, and the through holes are configured to admit compressed air to cool the driving board (330).

8. The 3D printing head according to any one of claims 1 to 7, wherein the ink supply component (200) further comprises a liquid material tank (610), a liquid supply pump (630) and a liquid supply filter (620), the liquid supply pump (630) and the liquid supply filter (620) are communicatively arranged between the liquid material tank (610) and an ink supply chamber (211).

9. The 3D printing head according to claim 1, wherein a plurality of dividing plates (213) are provided in the ink supply chamber (211) to form a plurality of sub-ink supply chambers (211).

10. The 3D printing head according to any one of claims 1 to 7, wherein the 3D printing head further comprises a cleaning component, the cleaning component comprises a cleaning tank (411) and a scrubbing member, the cleaning tank (411) is configured to receive cleaning liquid, and the scrubbing member is movably mounted on the cleaning tank (411) for scrubbing the nozzle (320); and
the scrubbing member comprises a roller wheel (412) and a roller wheel driving member, the roller wheel (412) is rotatably mounted in the cleaning tank (411), and a sponge layer (413) is provided at an outer edge of the roller wheel (412), and the roller wheel driving member is drivingly connected to the roller wheel (412).

11. The 3D printing head according to claim 9, wherein the scrubbing member further comprises a jacking member (416) and a bracket (418), the jacking member (416) is arranged at the bottom of the cleaning tank (411), the bracket (418) is fixedly connected to an output end of the jacking member (416), and the roller wheel (412) is rotatably connected with the bracket (418).

12. The 3D printing head according to claim 11, wherein a cleaning brush for cleaning the sponge layer (413) is mounted on an inner wall of the cleaning tank (411); and
a scraper (414) for squeezing the sponge layer (413) is further provided on an inner wall of the cleaning tank (411).

13. The 3D printing head according to any one of claims 1 to 7, wherein the 3D printing head further comprises a gas source device, and the ink cartridge has at least two gas inlets; the gas source device comprises a first negative pressure generator (531) and a second negative pressure generator (532), a gas outlet of the first negative pressure generator (531) and a gas outlet of the second negative pressure generator (532) are respectively connected to the at least two gas inlets of the ink cartridge, so as to admit different negative pressures into the ink cartridge.

14. A 3D printer, comprising the 3D printing head according to any one of claims 1 to 13.

## Patentansprüche

1. 3D-Druckkopf, umfassend einen Montagerahmen (100), eine Tintenversorgungskomponente (200) und eine Tintenstrahlkomponente (300);
wobei die Tintenversorgungskomponente (200) eine Tintenkartusche umfasst und die Tintenkartusche am Montagerahmen (100) angeordnet ist; und
wobei die Tintenstrahlkomponente (300) eine Düse (320) und eine Antriebsplatine (330) umfasst, die auf dem Montagerahmen (100) angeordnet sind, wobei die Düse (320) in Fluidverbindung mit der Tintenkartusche steht und die Antriebsplatine (330) in Fluidverbindung mit der Düse (320) durch Einstecken steht, um die Düse (320) so zu steuern, dass sie Tinte ausstößt,
**dadurch gekennzeichnet, dass**
die Tintenversorgungskomponente (200) weiterhin einen Unterdruckkasten (240) umfasst, wobei die Tintenkartusche eine Tintenversorgungskammer (211) und eine Tintenrücklaufkammer (212) aufweist, wobei der Unterdruckkasten (240) einen Tintenversorgungs-Unterdruckkammer (241) aufweist und eine Tintenrücklauf-Unterdruckkammer (242), wobei die Tintenversorgungskammer (211) in Fluidverbindung mit der Tintenversorgungs-Unterdruckkammer (241) steht und die Tintenrücklaufkammer (212) in Fluidverbindung mit die Tintenrücklauf-Unterdruckkammer (242) steht; und
wobei die Düse (320) in Fluidverbindung mit der Tintenversorgungskammer (211) und der Tintenrücklaufkammer (212) der Tintenkartusche steht.

2. 3D-Druckkopf nach Anspruch 1, wobei
die Tintenversorgungskomponente (200) ferner ein Nebenschlussrohr (220) umfasst, das in Fluidverbindung mit der Tintenkartusche steht; wobei das Nebenschlussrohr (220) ein Rohr ist, das so konfiguriert ist, dass es eine Fluidverbindung zwischen der Düse (320) und der Tintenkartusche realisiert, und
wobei die Düse (320) in Fluidverbindung mit dem Nebenschlussrohr (220) steht.

3. 3D-Druckkopf nach Anspruch 2, wobei der Montagerahmen (100) eine Verbindungsplatte (110), eine Dreipunkt-Einstellplatte (120) und eine Abdeckplatte (130) umfasst, wobei die Verbindungsplatte (110) so konfiguriert ist, dass sie mit einem Antriebsmodul verbunden ist und den 3D-Druckkopf zur Bewegung antreibt, wobei die Dreipunkt-Einstellplatte (120) auf der Verbindungsplatte (110) angeordnet ist und die Abdeckplatte (130) beweglich auf der Dreipunkt-Einstellplatte (120) montiert ist;
wobei die Tintenkartusche an der Dreipunkt-Einstellplatte (120) angebracht ist und das Nebenschlussrohr (220) an der Abdeckplatte (130) angeordnet ist; und
wobei die Tintenstrahlkomponente (300) ferner eine Druckgrundplatte (310) umfasst, wobei die Druckgrundplatte (310) mit der Abdeckplatte (130) verbunden ist und die Düse (320) an der Druckgrundplatte (310) angebracht ist.

4. 3D-Druckkopf nach Anspruch 3, wobei das Nebenschlussrohr (220) eine Vielzahl von Abzweigrohren umfasst und die Abzweigrohre in Fluidverbindung miteinander stehen; und
wobei eine Vielzahl von Düsen (320) vorgesehen sind, und die Vielzahl von Düsen (320) in einem Array auf der Druckgrundplatte (310) angeordnet sind, und wobei jede Spalte der Düsen (320) entsprechend einem der Abzweigrohre angeordnet ist.

5. 3D-Druckkopf nach Anspruch 3, wobei die Abdeckplatte (130) mit Positionierungssitzen (131) versehen ist, die den Positionen von drei Punkten der Dreipunkt-Einstellplatte (120) entsprechen, und wobei ein Mikrometerkopf (132) an jedem Positionierungssitz (131) zum Einstellen der horizontalen Geradheit der Dreipunkt-Einstellplatte (120) angebracht ist.

6. 3D-Druckkopf nach Anspruch 2, wobei der Montagerahmen (100) zwei gegenüberliegende Seitenplatten (160) und eine Vielzahl von Querrippen aufweist, die die beiden Seitenplatten (160) verbinden, und wobei die Düse (320) an einer unten liegenden Querrippe angeordnet ist.

7. 3D-Druckkopf nach Anspruch 6, wobei die in der Mitte befindliche Querrippe mit einer Vielzahl von Durchgangslöchern versehen ist und die Durchgangslöcher so konfiguriert sind, dass sie Druckluft zur Kühlung der Antriebsplatte (330) zulassen.

8. 3D-Druckkopf nach einem der Ansprüche 1 bis 7, wobei die Tintenversorgungskomponente (200) ferner einen Flüssigkeitsmaterialtank (610), eine Flüssigkeitsversorgungspumpe (630) und einen Flüssigkeitsversorgungsfilter (620) umfasst, wobei die Flüssigkeitsversorgungspumpe (630) und der Flüssigkeitsversorgungsfilter (620) kommunizierend zwischen dem Flüssigkeitsmaterialtank (610) und einer Tintenversorgungskammer (211) angeordnet sind.

9. 3D-Druckkopf nach Anspruch 1, wobei eine Vielzahl von Trennplatten (213) in der Tintenversorgungskammer (211) vorgesehen sind, um eine Vielzahl von Sub-Tintenversorgungskammer (211) zu bilden.

10. 3D-Druckkopf nach einem der Ansprüche 1 bis 7, wobei der 3D-Druckkopf ferner eine Reinigungskomponente umfasst, wobei die Reinigungskomponente einen Reinigungstank (411) und ein Schrubbelement umfasst, wobei der Reinigungstank (411) so konfiguriert ist, dass er Reinigungsflüssigkeit aufnimmt, und wobei das Schrubbelement beweglich am Reinigungstank (411) montiert ist, um die Düse (320) zu schrubben; und
wobei das Schrubbelement ein Rollenrad (412) und ein Rollenrad-Antriebselement umfasst, wobei das Rollenrad (412) drehbar im Reinigungstank (411) montiert ist und eine Schwammschicht (413) an einer Außenkante des Rollenrads (412) vorgesehen ist und das Rollenrad-Antriebselement antriebsmäßig mit dem Rollenrad (412) verbunden ist.

11. 3D-Druckkopf nach Anspruch 9, wobei das Schrubbelement außerdem ein Hebeelement (416) und eine Halterung (418) umfasst, wobei das Hebeelement (416) am Boden des Reinigungstanks (411) angeordnet ist, wobei die Halterung (418) fest mit einem Ausgangsende des Hebeelements (416) verbunden ist, und wobei das Rollenrad (412) drehbar mit der Halterung (418) verbunden ist.

12. 3D-Druckkopf nach Anspruch 11, wobei eine Reinigungsbürste zum Reinigen der Schwammschicht (413) an einer Innenwand des Reinigungstanks (411) angebracht ist; und
ein Abstreifer (414) zum Zusammendrücken der Schwammschicht (413) ist ferner an einer Innenwand des Reinigungstanks (411) vorgesehen.

13. 3D-Druckkopf nach einem der Ansprüche 1 bis 7, wobei der 3D-Druckkopf ferner eine Gasquellenvorrichtung umfasst und die Tintenkartusche mindestens zwei Gaseinlässe aufweist; wobei die Gasquellenvorrichtung einen ersten Unterdruckgenerator (531) und einen zweiten Unterdruckgenerator (532) umfasst, wobei ein Gasauslass des ersten Unterdruckgenerators (531) und ein Gasauslass des zweiten Unterdruckgenerators (532) jeweils mit den mindestens zwei Gaseinlässen der Tintenkartusche verbunden sind, um so unterschiedliche Unterdrücke in die Tintenkartusche zu lassen.

14. 3D-Drucker, umfassend den 3D-Druckkopf nach einem der Ansprüche 1 bis 13.

## Revendications

1. Tête d'impression 3D, comprenant un cadre de montage (100), un composant d'alimentation en encre (200) et un composant à jet d'encre (300) ;
le composant d'alimentation en encre (200) comprend une cartouche d'encre, et la cartouche d'encre est disposée sur le cadre de montage (100) ; et
le composant à jet d'encre (300) comprend une buse (320) et une planche d'entraînement (330) disposée sur le cadre de montage (100), la buse (320) est en communication fluidique avec la cartouche d'encre, et la planche d'entraînement (330) est relié à la buse (320) par insertion pour commander la buse (320) pour éjecter de l'encre,
la tête d'impression 3D est **caractérisée en ce que**,
le composant d'alimentation en encre (200) comprend en outre un boîtier à pression négative (240), la cartouche d'encre possède une chambre d'alimentation en encre (211) et une chambre de retour d'encre (212), le boîtier à pression négative (240) possède une chambre à pression négative d'alimentation en encre (241) et une chambre à pression négative de retour d'encre (242), la chambre d'alimentation en encre (211) est en communication fluidique avec la chambre à pression négative d'alimentation en encre (241), et la chambre de retour d'encre (212) est en communication fluidique avec la chambre à pression négative de retour d'encre (242) ; et
la buse (320) est en communication fluidique avec la chambre d'alimentation en encre (211) et la chambre de retour d'encre (212) de la cartouche d'encre.

2. Tête d'impression 3D selon la revendication 1, dans laquelle le composant d'alimentation en encre (200) comprend en outre un tuyau de dérivation (220) qui est en communication fluidique avec la cartouche d'encre ; le tuyau de dérivation (220) est un tuyau configuré pour réaliser une communication fluidique entre la buse (320) et la cartouche d'encre, et
la buse (320) est en communication fluidique avec le tuyau de dérivation (220).

3. Tête d'impression 3D selon la revendication 2, dans laquelle le cadre de montage (100) comprend une plaque de connexion (110), une plaque de réglage trois points (120) et une plaque de recouvrement (130), la plaque de connexion (110) est configuré pour se connecter à un module d'entraînement et entraîner le déplacement de la tête d'impression 3D, la plaque de réglage à trois points (120) est disposée sur la plaque de connexion (110), et la plaque de recouvrement (130) est montée mobile sur la plaque de réglage à trois points (120) ;
la cartouche d'encre est montée sur la plaque de réglage à trois points (120), et le tuyau de dérivation (220) est disposé sur la plaque de recouvrement (130) ; et
le composant à jet d'encre (300) comprend en outre une plaque de base d'impression (310), la plaque de base d'impression (310) est reliée à la plaque de couverture (130), et la buse (320) est montée sur la plaque de base d'impression (310).

4. Tête d'impression 3D selon la revendication 3, dans laquelle le tuyau de dérivation (220) comprend une pluralité de tuyaux de dérivation, et les tuyaux de dérivation sont en communication fluidique les uns avec les autres ; et
une pluralité de buses (320) est prévue, et la pluralité de buses (320) est disposée en un réseau sur la plaque de base d'impression (310), et chaque colonne de buses (320) est disposée en correspondance avec l'une des tuyaux de dérivation.

5. Tête d'impression 3D selon la revendication 3, dans laquelle la plaque de recouvrement (130) est dotée de sièges de positionnement (131) correspondant aux positions de trois points de la plaque de réglage à trois points (120), et une tête micrométrique (132) est montée sur chaque siège de positionnement (131) pour régler la rectitude horizontale de la plaque de réglage à trois points (120).

6. Tête d'impression 3D selon la revendication 2, dans laquelle le cadre de montage (100) comprend deux plaques latérales opposées (160) et une pluralité de nervures transversales reliant les deux plaques latérales (160), et la buse (320) est disposée sur une nervure transversale située en bas.

7. Tête d'impression 3D selon la revendication 6, dans laquelle la nervure transversale située au milieu est dotée d'une pluralité de trous traversants, et les trous traversants sont configurés pour admettre de l'air comprimé pour refroidir la planche d'entraînement (330).

8. Tête d'impression 3D selon l'une quelconque des revendications 1 à 7, dans laquelle le composant d'alimentation en encre (200) comprend en outre un réservoir de matériau liquide (610), une pompe d'alimentation en liquide (630) et un filtre d'alimentation en liquide (620), la pompe d'alimentation en liquide (630) et le filtre d'alimentation en liquide (620) sont disposés de manière à communiquer entre le réservoir de matériau liquide (610) et une chambre d'alimentation en encre (211).

9. Tête d'impression 3D selon la revendication 1, dans laquelle une pluralité de plaques de division (213) sont prévues dans la chambre d'alimentation en encre (211) pour former une pluralité de chambres d'alimentation en encre secondaire (211).

10. Tête d'impression 3D selon l'une quelconque des revendications 1 à 7, dans laquelle la tête d'impression 3D comprend en outre un composant de nettoyage, le composant de nettoyage comprend un réservoir de nettoyage (411) et un élément de récurage, le réservoir de nettoyage (411) est configuré pour recevoir un liquide de nettoyage, et l'élément de récurage est monté mobile sur le réservoir de nettoyage (411) pour frotter la buse (320) ; et
l'élément de récurage comprend une roue à rouleaux (412) et un élément d'entraînement de roue à rouleaux, la roue à rouleaux (412) est montée rotative dans le réservoir de nettoyage (411), et une couche d'éponge (413) est disposée au niveau d'un bord extérieur du roue à rouleaux (412), et l'élément d'entraînement de roue à rouleaux est relié par entraînement à la roue à rouleaux (412).

11. Tête d'impression 3D selon la revendication 9, dans laquelle l'élément de récurage comprend en outre un élément de vérin (416) et un support (418), l'élément de vérin (416) est disposé au fond du réservoir de nettoyage (411), le support (418) est relié de manière fixe à une extrémité de sortie de l'élément de vérin (416), et la roue à rouleaux (412) est reliée de manière rotative au support (418).

12. Tête d'impression 3D selon la revendication 11, dans laquelle une brosse de nettoyage pour nettoyer la couche d'éponge (413) est montée sur une paroi interne du réservoir de nettoyage (411) ; et
un grattoir (414) pour presser la couche d'éponge (413) est en outre disposé sur une paroi interne du réservoir de nettoyage (411).

13. Tête d'impression 3D selon l'une quelconque des revendications 1 à 7, dans laquelle la tête d'impression 3D comprend en outre un dispositif source de gaz, et la cartouche d'encre présente au moins deux entrées de gaz ; le dispositif source de gaz comprend un premier générateur de pression négative (531) et un deuxième générateur de pression négative (532), une sortie de gaz du premier générateur de pression négative (531) et une sortie de gaz du deuxième générateur de pression négative (532) sont respectivement connectées aux au moins deux entrées de gaz de la cartouche d'encre, de manière à admettre différentes pressions négatives dans la cartouche d'encre.

14. Imprimante 3D, comprenant la tête d'impression 3D selon l'une quelconque des revendications 1 à 13.
